# EUROPEAN PATENT SPECIFICATION

(11) **EP 4 483 607 B1**
(45) Date of publication and mention of the grant of the patent: **15.10.2025**
(21) Application number: 23761230.4
(22) Date of filing: 09.08.2023
(51) Int. Cl.: H04W 24/08, H04W 24/10

(54) **QUALITY OF EXPERIENCE MEASUREMENTS COLLECTION**
ERFASSUNG VON ERFAHRUNGSQUALITÄTSMESSUNGEN
COLLECTE DE MESURES DE QUALITÉ D'EXPÉRIENCE

(30) Priority: 09.08.2022 US 202263396434 P
(43) Date of publication of application: 01.01.2025
(73) Proprietor: Lenovo (Singapore) Pte. Ltd., Singapore 556741 (SG)
(72) Inventor: CHOI, Hyung-Nam, 85521 Ottobrunn (DE)
(74) Representative: Marks & Clerk LLP
(86) International application number: PCT/IB2023/058049
(87) International publication number: WO 2024/033832

(56) References cited:
- WO-A1-2022/164380
- ERICSSON: "Clarification of UE capability for QoE Measurement Collection for streaming services", vol. RAN WG2, no. Hangzhou, China; 20170515 - 20170519, 14 May 2017 (2017-05-14), XP051275265, Retrieved from the Internet <URL:http://www.3gpp.org/ftp/Meetings_3GPP_SYNC/RAN2/Docs/> [retrieved on 20170514]
- "3 Generation Partnership Project; Technical Specification Group Radio Access Network; Study on NR QoE (Quality of Experience) management and optimizations for diverse services (Release 17)", vol. RAN WG3, no. V17.0.0, 9 April 2021 (2021-04-09), pages 1 - 18, XP052000775, Retrieved from the Internet <URL:https://ftp.3gpp.org/Specs/archive/38_series/38.890/38890-h00.zip 38890-h00.docx> [retrieved on 20210409]

## Description

### RELATED APPLICATION

This application claims priority to U.S. Provisional Application Serial No. 63/396,434 filed August 09, 2022 entitled "Quality of Experience Measurements Collection".

### TECHNICAL FIELD

The present disclosure relates to wireless communications, and more specifically to quality of experience (QoE) measurement information.

### BACKGROUND

A wireless communications system may include one or multiple network communication devices, such as base stations, which may be otherwise known as an eNodeB (eNB), a next-generation NodeB (gNB), or other suitable terminology. Each network communication devices, such as a base station may support wireless communications for one or multiple user communication devices, which may be otherwise known as user equipment (UE), or other suitable terminology. The wireless communications system may support wireless communications with one or multiple user communication devices by utilizing resources of the wireless communications system, such as time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

In a wireless communications system, QoE measurement information can be collected by operators for streaming, multimedia telephony service for IP multimedia subsystem (IMS) (MTSI), and virtual reality (VR) services to better understand the user experience and optimize their network for the services. Typically for QoE measurement configurations received from the network, a UE application layer will collect the QoE measurements for configured services, and the UE access stratum (AS) layer will report the collected measurements to the network.

WO2022/164380A1 relates to techniques for managing quality of experience (QoE) measurements by a user equipment. An example method, in a first node in a radio access network, comprises transmitting, to a second node in the radio access network, status information for measurements associated to one or more QoE measurements configured for the user equipment by the first node.

Ericsson: "Clarification of UE capability for QoE Measurement Collection for streaming services", 3GPP draft, R2-1704740, vol. RAN WG2, no. Hangzhou, China; 20170515 - 20170519, 14 May 2017 (2017-05-14), XP051275265, teaches that a user equipment which supports QoE measurement collection for streaming services has to support an RLC buffer size of at least 8000 bytes in order to fit a QoE report in one RLC SDU for segmentation.

### SUMMARY

The invention provides a user equipment of claim 1, a network entity of claim 9 and a method of claim 15. By utilizing the described techniques, a base station in a wireless communications system can configure a multicast broadcast service (MBS)-capable UE for QoE measurement collection of MBS broadcast services using dedicated radio resource control (RRC) signaling in a RRC connected state. The network (e.g., base station, or base stations) can release QoE measurement configurations for MBS broadcast services to UEs in the RRC idle state by broadcasting a list of the concerned configurations to release. A UE in the RRC idle state that is collecting the QoE measurements for the MBS broadcast services acquires the new broadcast signaling and accordingly, will release the QoE measurement configuration(s). As a result, the UE will also stop any measurement collection for the released QoE measurement configuration(s) and discard any stored QoE measurement reports associated with the released QoE measurement configuration(s) from its AS layer buffer. As part of the UE capability information transfer procedure, an MBS-capable UE indicates to the network the maximum supported AS layer buffer size capability for storing MBS QoE measurements in the RRC idle state or the RRC inactive state.

By performing the described techniques, a UE can determine whether to continue, release, or activate the configured QoE measurement collection for MBS broadcast services upon RRC state transition (i.e., the UE can release the QoE measurement information without network directed control). Additionally, the configured QoE measurement collection for MBS broadcast services can be released in RRC idle state without establishing an RRC connection and without using dedicated RRC signaling, which conserves radio resources. Further, the network can efficiently control a UE transmission of collected QoE measurements for MBS broadcast services in the RRC idle state on the AS layer.

In some implementations of the method and apparatuses described herein, a UE receives a request for QoE measurements collection capabilities supported by the UE, and transmits an indication of a maximum AS layer buffer size capability for storing the QoE measurements in an RRC idle state or a RRC inactive state. The UE receives a configuration for collecting the QoE measurements for at least one MBS.

Some implementations of the method and apparatuses described herein may further include the UE collects the QoE measurements for the MBS as collected QoE measurements, and transmits the collected QoE measurements. The UE receives the request for QoE measurements collection capabilities, transmits the indication of maximum AS layer buffer size capability, receives the configuration for collecting the QoE measurements, and transmits the collected QoE measurements in an RRC connected state. The configuration for collecting the QoE measurements includes a session identity of a QoE measurements collection session, one or more RRC states of the QoE measurements collection session, or an AS layer reporting interval that triggers a transmission of collected QoE measurements associated with the QoE measurements collection session in the RRC idle state. The AS layer reporting interval is designated as a percentage relative to the maximum AS layer buffer size capability for storing the QoE measurements in the RRC idle state or the RRC inactive state. The UE receives an indication of release information associated with a release of one or more QoE measurement collection sessions for MBSs in the RRC idle state or the RRC inactive state. The UE determines whether to release at least one of the QoE measurement collection sessions for the MBSs based on the release information. The UE stops the QoE measurement collection for a released QoE measurement collection session, and discards stored QoE measurement reports associated with the released QoE measurement collection session from the AS layer buffer. The release information includes a list of session identities of the QoE measurement collection sessions indicating the release of the QoE measurement collection sessions for MBSs in the RRC idle state or the RRC inactive state. The release information is received as broadcast in a system information message, and the system information message is received in the RRC idle state or the RRC inactive state.

In some implementations of the method and apparatuses described herein, a base station transmits to a UE a request for QoE measurements collection capabilities supported by the UE, and receives an indication of a maximum AS layer buffer size capability of the UE for storing the QoE measurements in an RRC idle state or a RRC inactive state. The base station transmits a configuration of the UE for collecting the QoE measurements for at least one MBS.

Some implementations of the method and apparatuses described herein may further include the base station determines whether to configure the UE for collecting the QoE measurements for a MBS, and receives collected QoE measurements as collected by the UE for the MBS. The base station transmits the request for the QoE measurements collection capabilities, receives the indication of the maximum AS layer buffer size capability, transmits the configuration of the UE for collecting the QoE measurements, and receives the collected QoE measurements as communicated in a RRC connected state. The configuration for collecting the QoE measurements includes a session identity of a QoE measurements collection session, one or more RRC states of the QoE measurements collection session, and an AS layer reporting interval that triggers a transmission by the UE of collected QoE measurements associated with the QoE measurements collection session in the RRC idle state. The AS layer reporting interval is designated as a percentage relative to the maximum AS layer buffer size capability of the UE for storing the QoE measurements in the RRC idle state or the RRC inactive state. The base station transmits an indication of release information associated with a release of one or more QoE measurement collection sessions for MBSs in the RRC idle state or the RRC inactive state. The release information includes a list of session identities of the QoE measurement collection sessions indicating the release of the QoE measurement collection sessions for MBSs in the RRC idle state or the RRC inactive state. The release information is transmitted as broadcast in a system information message, and the system information message is transmitted to the UE in the RRC idle state or the RRC inactive state.

### BRIEF DESCRIPTION OF THE DRAWINGS

FIG. 1 illustrates an example of a wireless communications system that supports QoE measurements collection in accordance with aspects of the present disclosure.
FIG. 2 illustrates an example of UE states and state transitions in NR as related to QoE measurements collection in accordance with aspects of the present disclosure.
FIG. 3 illustrates an example of signaling-based initiated QoE measurement collection (QMC) activation as related to QoE measurements collection in accordance with aspects of the present disclosure.
FIG. 4 illustrates an example of signaling-based initiated QMC deactivation as related to QoE measurements collection in accordance with aspects of the present disclosure.
FIG. 5 illustrates an example of MBS delivery methods for multicast services as related to QoE measurements collection in accordance with aspects of the present disclosure.
FIG. 6 illustrates an example of signaling for reception of MBS broadcast services as related to QoE measurements collection in accordance with aspects of the present disclosure.
FIG. 7 illustrates an example of a UE mobility scenario as related to QoE measurements collection in accordance with aspects of the present disclosure.
FIG. 8 illustrates an example of a signaling flow diagram for configuration of QoE measurement collection for MBS broadcast services and triggering the transmission of collected measurements in RRC idle state, which supports QoE measurements collection in accordance with aspects of the present disclosure.
FIG. 9 illustrates an example of a signaling flow diagram for release of QoE measurement collection for MBS broadcast services in RRC idle state, which supports QoE measurements collection in accordance with aspects of the present disclosure.
FIGs. 10 and 11 illustrate an example of a block diagram of devices that support QoE measurements collection in accordance with aspects of the present disclosure.
FIGs. 12 through 15 illustrate flowcharts of methods that support QoE measurements collection in accordance with aspects of the present disclosure.

### DETAILED DESCRIPTION

In a wireless communications system, QoE measurement information can be collected by operators for streaming, MTSI, and virtual reality (VR) services to better understand the user experience and optimize their network for the services. Typically for QoE measurement configurations received from the network, a UE application layer will collect the QoE measurements for configured services, and the UE AS layer will report the collected measurements to the network. However, QMC is only supported for the RRC connected state if the UE is transferred by the network to an RRC idle state, then the UE will release all QoE measurement configurations. Further, if the UE is transferred by the network to RRC inactive state, then the UE will keep the QoE measurement configurations without measuring and reuse the same configurations upon transition from RRC inactive to RRC connected.

In previous solutions, MBS is specified for NR radio access technology (RAT) to allow for resource-efficient and reliable transmission of MBS traffic data to multiple UEs in a specific service area at the same time in a radio access network (RAN). In the case of broadcast services, the same content of traffic data is transmitted to all UEs located in a specific service area. In the case of multicast services, the same content of traffic data will be transmitted to a group of UEs located in a specific service area. The MBS multicast services are supported only in RRC connected state, whereas MBS broadcast services are supported in all RRC states (i.e., RRC connected, RRC inactive, and RRC idle).

Further, previous solutions support QoE measurement collection for MBS broadcast services with regards to activation, deactivation, and measurement reporting. For example, the network can determine the MBS broadcast services a UE is receiving in a RRC connected state. Based on the information received from the UE, the network can configure the UE in RRC connected for QoE measurement collection of MBS broadcast services. The network can also maintain and verify the QoE measurement configurations for MBS broadcast services of a UE when it is transferred to RRC idle state. If the UE in RRC idle state moves to a new serving cell and wants to transmit collected QoE measurements for MBS broadcast services in that cell, the serving network can then determine whether the UE is eligible to send the collected measurements in the current serving cell. The network can also specify MBS-specific QoE measurement reporting configurations to the UE for transmitting MBS QoE measurements to the network, which are collected in the UE when in RRC idle or RRC inactive states.

However, the known solutions with regards to activation, deactivation, and measurement reporting of QoE measurements for MBS broadcast services are not optimal for RRC idle state and thus, can be further enhanced. In general, the configuration (setup and release) of QoE measurements for MBS broadcast services can be performed by a network in a connected state using dedicated RRC signaling. However, in some cases, this may not be possible, such as when the UE in an inactive state moves to the idle state which was not triggered by reception of an RRC release message. This can happen if the current cell is not suitable anymore, or if the UE receives the RRC reject message while performing the RRC resume procedure or the RRC resume procedure fails. In this case the UE does not know which of the QoE measurement configurations for MBS broadcast services to continue or release in the idle state.

Further, if the network wants to release QoE measurement configurations for MBS broadcast services for UEs in the idle state, then it has to page those UEs. The paged UEs then need to perform an RRC connection establishment procedure, and after successful RRC connection establishment, the network can release the concerned QoE measurement configurations for those UEs in a connected state by using dedicated RRC signaling. However, this procedure is inefficient with regards to usage of radio resources.

Further, for the QoE measurement configurations for MBS broadcast services received from the network in a connected state, the concerned UEs will collect MBS QoE measurements in the idle state and send them in the connected state according to the received reporting configuration (i.e., the reporting interval). The reporting interval is given in seconds and can be set by the network (e.g., operation and maintenance (OAM)), such as for thirty (30) seconds, ten (10) minutes, or longer. However, triggering the transmission of the collected measurements to the network immediately whenever they are received by a UE AS layer from the UE application layer may not be needed since the measurements are sent on the lower priority signaling radio bearer (SRB4) in the connected state (i.e., the measurements as such are lower priority data and thus, there is no need for the network to receive them immediately).

In aspects of the described disclosure, details of QoE measurements collection are enhanced to support advanced services, such as augmented reality (AR), mixed reality (MR), and MBS. For MBS broadcast services, the QoE measurement collection is extended for RRC inactive and RRC idle states (in addition to RRC connected state) to enable the network to verify and optimize the performance of MBS broadcast services at a given location, and irrespective of a UE RRC state. A base station in a wireless communications system can configure an MBS-capable UE for QoE measurement collection of MBS broadcast services using dedicated RRC signaling in a RRC connected state. The network configures new parameters for the QoE measurement configurations, including *qoe-Reference*, which is a unique identifier to identify a QoE measurement collection session in the network. It is composed of mobile country code (MCC) plus mobile network code (MNC) plus a QMC ID. The new parameters also include *applicableRRC-States*, which contains the applicable RRC states of the QoE measurement configuration for MBS broadcast services. With this new parameter *applicableRRC-States,* the UE knows whether to continue, release, or activate the configured QoE measurement collection for MBS broadcast services upon RRC state transition.

The network (e.g., base station, or base stations) can release QoE measurement configurations for MBS broadcast services to UEs in the RRC idle state by broadcasting a list of the concerned configurations to release, and each entry of the list is given by the *goe-Reference* value. The broadcast of the list of the concerned configurations to release may be provided in a new system information block (SIB). Alternatively, it can be provided in one of the existing SIBs. A UE in the RRC idle state that is collecting the QoE measurements for the MBS broadcast services acquires the new broadcast signaling and accordingly, will release the QoE measurement configuration(s). As a result, the UE will also stop any measurement collection for the released QoE measurement configuration(s) for which a QoE reference value is equal to the QoE reference value provided per broadcast signaling. The UE will also discard any stored QoE measurement reports associated with the released QoE measurement configuration(s) from its AS layer buffer.

As part of the UE capability information transfer procedure, an MBS-capable UE indicates to the network the maximum supported AS layer buffer size capability for storing MBS QoE measurements in the RRC idle state called *goe-mbs-bufferSize-IdleState*. Based on the received value for *qoe-mbs-bufferSize-IdleState,* the network configures an AS layer reporting interval *qoe-mbs-reportInterval-IdleState* for triggering the transmission of collected MBS QoE measurements in RRC idle state. The AS layer reporting interval is given as a percentage level in relation to the new UE capability *qoe-mbs-bufferSize-IdleState.*

In aspects of the described techniques for QoE measurements collection, a UE can determine whether to continue, release, or activate a configured QoE measurement collection for MBS broadcast services upon RRC state transition (i.e., the UE can release the QoE measurement information without network directed control). Additionally, the configured QoE measurement collection for MBS broadcast services can be released in RRC idle state without establishing an RRC connection and without using dedicated RRC signaling, which conserves radio resources. Further, the network can efficiently control a UE transmission of collected QoE measurements for MBS broadcast services in the RRC idle state on the AS layer.

Aspects of the present disclosure are described in the context of a wireless communications system. Aspects of the present disclosure are further illustrated and described with reference to device diagrams and flowcharts.

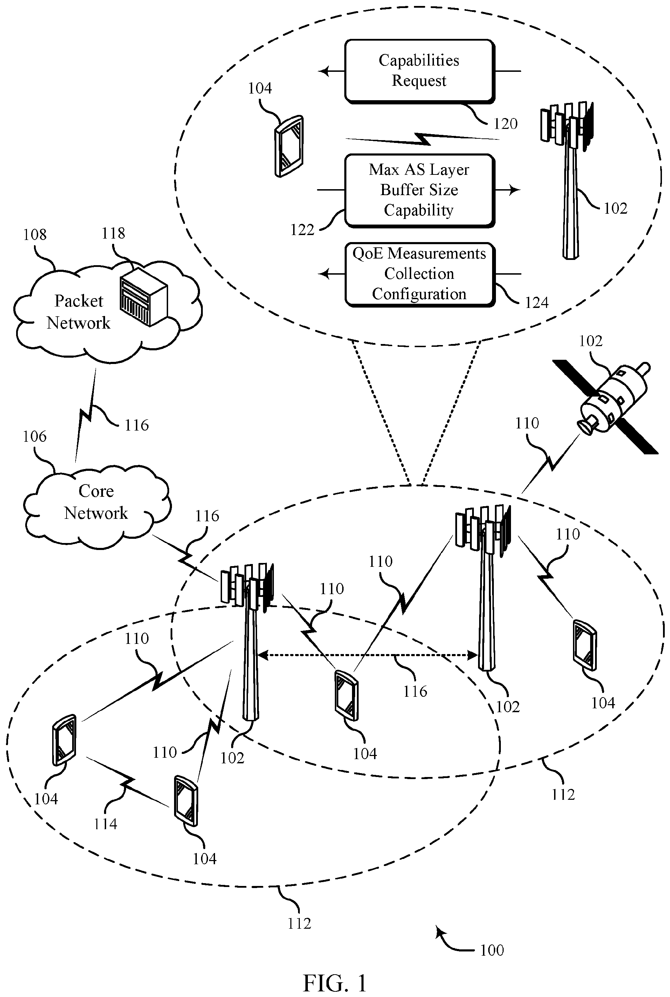

**FIG. 1** illustrates an example of a wireless communications system 100 that supports QoE measurements collection in accordance with aspects of the present disclosure. The wireless communications system 100 may include one or more network entities 102, one or more UEs 104, a core network 106, and a packet data network 108. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more network entities 102 may be dispersed throughout a geographic region to form the wireless communications system 100. One or more of the network entities 102 described herein may be or include or may be referred to as a network node, a base station, a network element, a radio access network (RAN), a base transceiver station, an access point, a NodeB, an eNodeB (eNB), a next-generation NodeB (gNB), or other suitable terminology. A network entity 102 and a UE 104 may communicate via a communication link 110, which may be a wireless or wired connection. For example, a network entity 102 and a UE 104 may perform wireless communication (e.g., receive signaling, transmit signaling) over a Uu interface.

A network entity 102 may provide a geographic coverage area 112 for which the network entity 102 may support services (e.g., voice, video, packet data, messaging, broadcast, etc.) for one or more UEs 104 within the geographic coverage area 112. For example, a network entity 102 and a UE 104 may support wireless communication of signals related to services (e.g., voice, video, packet data, messaging, broadcast, etc.) according to one or multiple radio access technologies. In some implementations, a network entity 102 may be moveable, for example, a satellite associated with a non-terrestrial network. In some implementations, different geographic coverage areas 112 associated with the same or different radio access technologies may overlap, but the different geographic coverage areas 112 may be associated with different network entities 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a remote unit, a handheld device, or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the network entities 102, other UEs 104, or network equipment (e.g., the core network 106, the packet data network 108, a relay device, an integrated access and backhaul (IAB) node, or another network equipment), as shown in FIG. 1. Additionally, or alternatively, a UE 104 may support communication with other network entities 102 or UEs 104, which may act as relays in the wireless communications system 100.

A UE 104 may also be able to support wireless communication directly with other UEs 104 over a communication link 114. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 114 may be referred to as a sidelink. For example, a UE 104 may support wireless communication directly with another UE 104 over a PC5 interface.

A network entity 102 may support communications with the core network 106, or with another network entity 102, or both. For example, a network entity 102 may interface with the core network 106 through one or more backhaul links 116 (e.g., via an S1, N2, or another network interface). The network entities 102 may communicate with each other over the backhaul links 116 (e.g., via an X2, Xn, or another network interface). In some implementations, the network entities 102 may communicate with each other directly (e.g., between the network entities 102). In some other implementations, the network entities 102 may communicate with each other or indirectly (e.g., via the core network 106). In some implementations, one or more network entities 102 may include subcomponents, such as an access network entity, which may be an example of an access node controller (ANC). An ANC may communicate with the one or more UEs 104 through one or more other access network transmission entities, which may be referred to as radio heads, smart radio heads, or transmission-reception points (TRPs).

In some implementations, a network entity 102 may be configured in a disaggregated architecture, which may be configured to utilize a protocol stack physically or logically distributed among two or more network entities 102, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 102 may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof.

An RU may also be referred to as a radio head, a smart radio head, a remote radio head (RRH), a remote radio unit (RRU), or a transmission reception point (TRP). One or more components of the network entities 102 in a disaggregated RAN architecture may be co-located, or one or more components of the network entities 102 may be located in distributed locations (e.g., separate physical locations). In some implementations, one or more network entities 102 of a disaggregated RAN architecture may be implemented as virtual units (e.g., a virtual CU (VCU), a virtual DU (VDU), a virtual RU (VRU)).

Split of functionality between a CU, a DU, and an RU may be flexible and may support different functionalities depending upon which functions (e.g., network layer functions, protocol layer functions, baseband functions, radio frequency functions, and any combinations thereof) are performed at a CU, a DU, or an RU. For example, a functional split of a protocol stack may be employed between a CU and a DU such that the CU may support one or more layers of the protocol stack and the DU may support one or more different layers of the protocol stack. In some implementations, the CU may host upper protocol layer (e.g., a layer 3 (L3), a layer 2 (L2)) functionality and signaling (e.g., Radio Resource Control (RRC), service data adaptation protocol (SDAP), Packet Data Convergence Protocol (PDCP)). The CU may be connected to one or more DUs or RUs, and the one or more DUs or RUs may host lower protocol layers, such as a layer 1 (L1) (e.g., physical (PHY) layer) or an L2 (e.g., radio link control (RLC) layer, medium access control (MAC) layer) functionality and signaling, and may each be at least partially controlled by the CU.

Additionally, or alternatively, a functional split of the protocol stack may be employed between a DU and an RU such that the DU may support one or more layers of the protocol stack and the RU may support one or more different layers of the protocol stack. The DU may support one or multiple different cells (e.g., via one or more RUs). In some implementations, a functional split between a CU and a DU, or between a DU and an RU may be within a protocol layer (e.g., some functions for a protocol layer may be performed by one of a CU, a DU, or an RU, while other functions of the protocol layer are performed by a different one of the CU, the DU, or the RU).

A CU may be functionally split further into CU control plane (CU-CP) and CU user plane (CU-UP) functions. A CU may be connected to one or more DUs via a midhaul communication link (e.g., F1, F1-c, F1-u), and a DU may be connected to one or more RUs via a fronthaul communication link (e.g., open fronthaul (FH) interface). In some implementations, a midhaul communication link or a fronthaul communication link may be implemented in accordance with an interface (e.g., a channel) between layers of a protocol stack supported by respective network entities 102 that are in communication via such communication links.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management function (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more network entities 102 associated with the core network 106.

The core network 106 may communicate with the packet data network 108 over one or more backhaul links 116 (e.g., via an S1, N2, or another network interface). The packet data network 108 may include an application server 118. In some implementations, one or more UEs 104 may communicate with the application server 118. A UE 104 may establish a session (e.g., a protocol data unit (PDU) session, or the like) with the core network 106 via a network entity 102. The core network 106 may route traffic (e.g., control information, data, and the like) between the UE 104 and the application server 118 using the established session (e.g., the established PDU session). The PDU session may be an example of a logical connection between the UE 104 and the core network 106 (e.g., one or more network functions of the core network 106).

In the wireless communications system 100, the network entities 102 and the UEs 104 may use resources of the wireless communications system 100, such as time resources (e.g., symbols, slots, subframes, frames, or the like) or frequency resources (e.g., subcarriers, carriers) to perform various operations (e.g., wireless communications). In some implementations, the network entities 102 and the UEs 104 may support different resource structures. For example, the network entities 102 and the UEs 104 may support different frame structures. In some implementations, such as in 4G, the network entities 102 and the UEs 104 may support a single frame structure. In some other implementations, such as in 5G and among other suitable radio access technologies, the network entities 102 and the UEs 104 may support various frame structures (i.e., multiple frame structures). The network entities 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. The first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. Each slot may include a number (e.g., quantity) of symbols (e.g., orthogonal frequency division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the network entities 102 and the UEs 104 may perform wireless communications over one or more of the operating frequency bands. In some implementations, FR1 may be used by the network entities 102 and the UEs 104, among other equipment or devices for cellular communications traffic (e.g., control information, data). In some implementations, FR2 may be used by the network entities 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

According to implementations, one or more of the network entities 102 and the UEs 104 are operable to implement various aspects of QoE measurements collection, as described herein. For instance, a network entity 102 (e.g., a base station) communicates a capabilities request 120 for QoE measurements collection capabilities supported by a UE. The UE 104 receives the capabilities request 120 and replies (i.e., transmits) an indication of a maximum AS layer buffer size capability 122 of the UE for storing the QoE measurements in an RRC idle state. The network entity 102 receives the indication of the maximum AS layer buffer size capability 122 from the UE, and communicates a QoE measurements collection configuration 124 of the UE for collecting the QoE measurements for at least one MBS. The UE 104 receives the QoE measurements collection configuration 124 from the network entity.

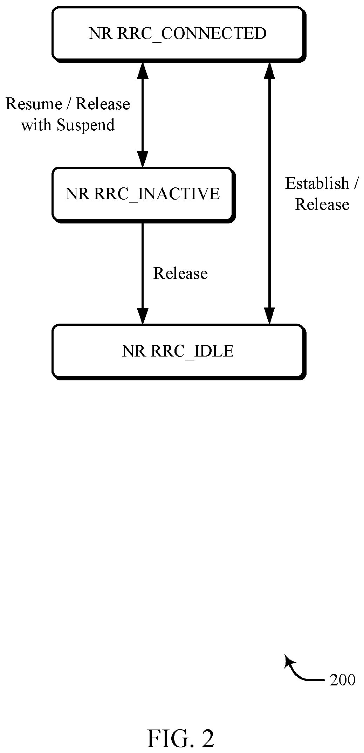

**FIG. 2** illustrates an example 200 of UE states and state transitions in NR as related to QoE measurements collection in accordance with aspects of the present disclosure. With reference to UE states and state transitions in NR, a UE is either in an RRC connected state (i.e., RRC_CONNECTED) or in an RRC inactive state (i.e., RRC_INACTIVE) when an RRC connection has been established. If this is not the case (i.e., no RRC connection is established), the UE is in an RRC idle state (i.e., RRC_IDLE). The RRC states can be further characterized.

For example, in the RRC idle state, the UE monitors short messages transmitted with paging-radio network temporary identifier (P-RNTI) over downlink control information (DCI); monitors a paging channel for core network (CN) paging using 5G S-temporary mobile subscriber identity (5G-S-TMSI); performs neighboring cell measurements and cell (re-)selection; acquires system information and can send a system information (SI) request (if configured); performs logging of available measurements together with location and time for logged measurement configured UEs; and performs idle and inactive measurements for idle and inactive measurement configured UEs.

In the RRC inactive state, the UE monitors short messages transmitted with P-RNTI over DCI; monitors a paging channel for CN paging using 5G-S-TMSI and RAN paging using full inactive RNTI (I-RNTI); performs neighboring cell measurements and cell (re-)selection; performs RAN-based notification area updates periodically and when moving outside the configured RAN-based notification area; acquires system information and can send a SI request (if configured); performs logging of available measurements together with location and time for logged measurement configured UEs; and performs idle and inactive measurements for idle and inactive measurement configured UEs.

In the RRC connected state, the UE transmits or receives unicast data; monitors short messages transmitted with P-RNTI over DCI (if configured); monitors control channels associated with the shared data channel to determine if data is scheduled for it; provides channel quality and feedback information; performs neighboring cell measurements and measurement reporting; acquires system information; and performs immediate minimization of drive test (MDT) measurement together with available location reporting.

With reference to QMC, the QMC for streaming, MTSI, and VR services has been specified for NR, in which two methods will be supported for OAM-initiated QMC activation and deactivation, specifically, signaling-based and management-based initiation. The signaling-based method is a C-plane method where the CN is involved and the CN determines the qualified UEs to send the QoE measurement configuration. According to this method, the OAM initiates QMC, but actually CN activates it towards RAN. For the management-based method, the CN is not involved and the OAM directly activates or deactivates a QoE measurement configuration towards RAN.

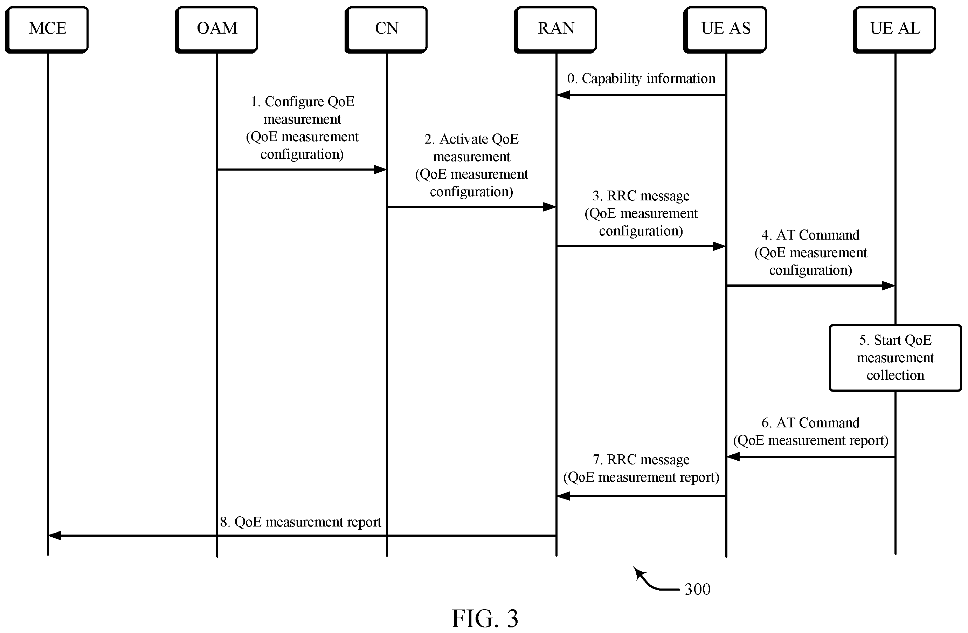

FIG. 3 illustrates an example 300 of signaling-based initiated QMC activation as related to QoE measurements collection in accordance with aspects of the present disclosure. In the signaling diagram (at step 0), the RAN receives UE capability information from the UE AS layer, including whether it supports QMC or not. The OAM (at step 1) is interested in receiving QoE measurements for certain services from UEs which are being serviced in a public land mobile network (PLMN) and sends a "Configure QoE measurement" message to CN. The "Configure QoE measurement" message can include information, such as service type, area scope (e.g., a list of cells or a list of tracking areas (Tas)), a QoE collection entity address (e.g., IPv4 or IPv6 address of the measurement collection entity (MCE) to which the QoE measurement reports shall be transferred), a QoE reference (e.g., a QoE measurement collection session identifier in the network), and the QoE measurement configuration container (e.g., a QoE measurement configuration which is relevant for the UE application layer and which is encapsulated in a container).

In accordance with the received QoE measurement configuration from OAM, the CN (at step 2) activates the QoE measurement configuration for a qualified UE and forwards the QoE measurement configuration to RAN using an "Activate QoE measurement" message. The RAN (at step 3) sends the QoE measurement configuration in a downlink RRC message to the UE AS layer. The UE AS layer (at step 4) sends the received QoE measurement configuration to its application layer (AL) using an ATtention (AT) command. The UE application layer (at step 5) starts QoE measurement collection in accordance with the received QoE measurement configuration. The QoE measurement configuration can include parameters, such as PLMN target, a session to record of an application, a service type, an area scope (e.g., a list of cells or a list of TAs), QoE metrics of the concerned service type, and a reporting interval. For instance, the QoE metrics for streaming services include, but are not limited to, average throughput, initial playout delay, buffer level, play list, and device information.

If the QoE measurements have been collected according to the configuration parameters, the UE application layer (at step 6) sends the collected QoE measurement results to its AS layer in a QoE measurement report container using an AT command. The UE AS layer (at step 7) sends the QoE measurement report container in an uplink RRC message to RAN. The RAN (at step 8) forwards the received QoE measurement report container to the MCE. In implementations, the RRC message in step 3 can be the *RRCReconfiguration* message, and the RRC message in step 7 can be the *MeasurementReportAppLayer* message. The *RRCReconfiguration* message is sent on signaling radio bearer (SRB1) and can contain one or multiple QoE measurement configurations. The *MeasurementReportAppLayer* message is sent on SRB4 and can contain one or multiple QoE measurement reports.

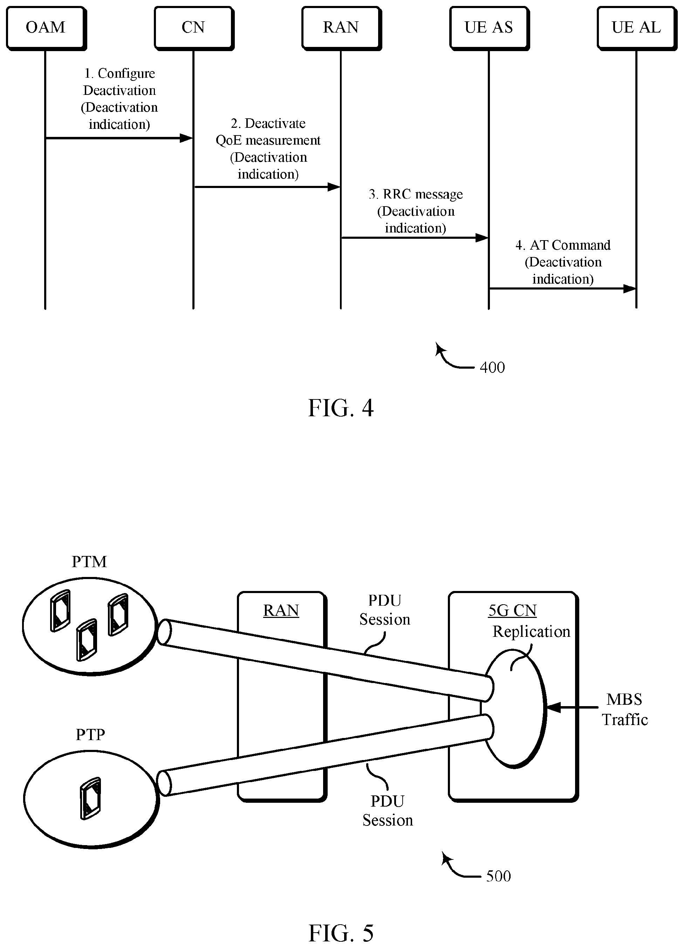

**FIG. 4** illustrates an example 400 of signaling-based initiated QMC deactivation as related to QoE measurements collection in accordance with aspects of the present disclosure. If OAM is not interested in receiving QoE measurements for certain services from UEs anymore (e.g., because it has enough QoE information for those services), then OAM initiates QMC deactivation. In the signaling diagram (at step 1), the OAM sends a "Configure Deactivation" message including an indication of the concerned service(s) to CN. In accordance with the received "Configure Deactivation" message from OAM, the CN (at step 2) sends a "Deactivate QoE measurement" message to RAN with the indication as to the UE that the concerned QoE measurement configuration should be deactivated. The RAN (at step 3) sends the deactivation indication in a downlink RRC message to the UE AS layer to release the concerned QoE measurement configuration. The RRC message can be the *RRCReconfiguration* message. The UE AS layer (at step 4) sends the received deactivation indication to its application layer using an AT command. The UE AL stops the recording and reporting of the concerned QoE measurements.

With reference to multicast and broadcast services in NR, the MBS has been specified for NR RAT to allow the resource-efficient and reliable transmission of MBS traffic data to multiple UEs in a specific service area at the same time in RAN. In the case of broadcast services, the same content of traffic data will be transmitted to all UEs, whereas in the case of multicast services, the same content of traffic data will be transmitted to a group of UEs located in a specific service area. The targeted applications and/or services for MBS include Internet protocol television (IPTV), linear TV, radio, group communications (voice/data/video), IoT applications, V2X applications, and software delivery.

**FIG. 5** illustrates an example 500 of MBS delivery methods for multicast services as related to QoE measurements collection in accordance with aspects of the present disclosure. The MBS multicast services are supported in RRC connected state only, whereas MBS broadcast services are supported in all RRC states (i.e., RRC idle state, RRC inactive state, and RRC connected state). An MBS service area consists of one or multiple cells, and MBS traffic data can be delivered in each of those cells either by point-to-multipoint (PTM) or point-to-point (PTP) to the UEs, as shown in the example 500 for multicast services. In the PTM case, the 5G CN receives a single copy of MBS data packets and delivers the single copy of those MBS packets to RAN, which then delivers them to multiple UEs. In the PTP case, the 5G CN receives a single copy of MBS data packets and delivers separate copies of those MBS packets to RAN, which then delivers them to the UE individually.

In general, the use of the MBS delivery methods is dependent on a type of service (broadcast or multicast), the number of MBS-capable UEs located in a service area cell, the cell load situation and/or QoS requirements. For instance, in the case of a multicast service when the cell load is high and there are many MBS-capable UEs located in the cell which are receiving or interested in receiving the concerned multicast service, the gNB can determine to deliver traffic data of the multicast service per PTM to the UEs. Otherwise, the gNB can determine to deliver the traffic data of the multicast service individually per PTP to the UEs.

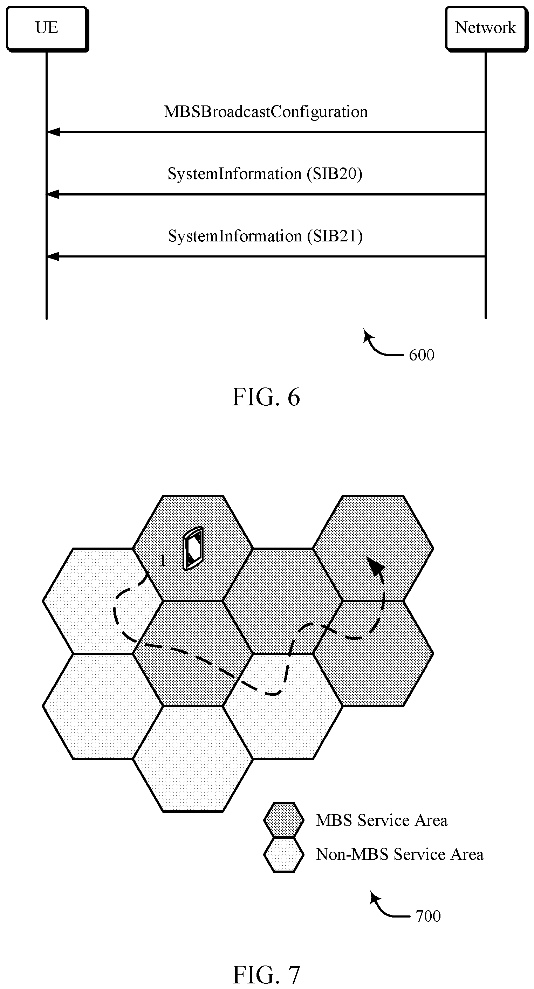

**FIG. 6** illustrates an example 600 of signaling for reception of MBS broadcast services as related to QoE measurements collection in accordance with aspects of the present disclosure. With regards to the provisioning of MBS broadcast services in a cell of the MBS service area, the network broadcasts the following information: the *MBSBroadcastConfiguration* message contains information about the broadcast services which are transmitted in the current cell and neighboring cells; SIB20 in a *SystemInformation* message contains information about the AS layer configuration for receiving MBS broadcast services; and SIB21 in the *SystemInformation* message contains information about the mapping between frequency and MBS broadcast services. With this broadcast information, an MBS-capable UE in an RRC idle state and an RRC inactive state that is receiving or interested to receive MBS broadcast services can perform cell re-reselection to the cells that provide these MBS broadcast services.

**FIG. 7** illustrates an example 700 of a UE mobility scenario as related to QoE measurements collection in accordance with aspects of the present disclosure. Due to mobility, a UE may move across MBS and non-MBS service areas, such as shown in the example 700. For the reception of multicast services by UEs in a connected state and in the concerned MBS service areas, the network will receive feedback, such as hybrid automatic repeat request (HARQ) or radio link control (RLC) acknowledgements from the UEs. However, for the reception of broadcast services, there will be no feedback from the UEs, which means that the network has no knowledge as to whether broadcast services have been successfully received or not by the UEs. Hence, it is not possible for the network to verify the performance of broadcast transmissions in the concerned MBS service areas.

In aspects of the described QoE measurements collection, the QoE measurement collection for MBS broadcast services in RRC_IDLE state include configuration of QoE measurement collection for MBS broadcast services, release of QoE measurement collection for MBS broadcast services in RRC_IDLE state, and triggering the transmission of collected MBS QoE measurements in RRC_IDLE state. With reference to the configuration of QoE measurement collection for MBS broadcast services, the network configures an MBS-capable UE for QoE measurement collection of MBS broadcast services by using dedicated RRC signaling in the RRC connected state, and configures new parameters *goe-Reference* and *applicableRRC-States* for the concerned QoE measurement configurations.

Accordingly, the field *appLayerMeasConfig* in the *RRCReconfiguration* message then contains at least the following parameters for each QoE measurement configuration to setup for MBS broadcast services: *measConfigAppLayerId* used to identify the QoE measurement configuration on RRC level; *measConfigAppLayerContainer* contains the QoE measurement configuration for MBS broadcast services encapsulated in a container; *serviceType* contains the value "mbs-broadcast"; and new parameter *goe-Reference,* which is a unique identifier to identify the QoE measurement collection session in the network. It is composed of MCC plus MNC plus a QMC ID, where MCC is a 3-digit value, MNC is a 2-3 digit value, and QMC ID is a 3 byte Octet String. For instance, MCC for Germany in "262", MNC may be set to "06" and QMC ID may be set to "000004" (value given in hexa-decimal).

Additionally, a new parameter *applicableRRC-States* indicates the applicable RRC states of the QoE measurement configuration for MBS broadcast services. Candidate values are {all states, connected state only, connected and inactive state, idle state only}. A value of "all states" means that the QoE measurement configuration is applicable in all RRC states (i.e., RRC_CONNECTED, RRC_INACTIVE and RRC_IDLE). A value of "connected state only" means that the QoE measurement configuration is applicable only in the RRC connected state. A value of "connected and inactive state" means that the QoE measurement configuration is applicable in the RRC connected state and the RRC inactive state. A value of "idle state only" means that the QoE measurement configuration is applicable only in the RRC idle state. With the new parameter *applicableRRC-States,* the UE knows whether to continue, release, or activate the configured QoE measurement collection for MBS broadcast services upon RRC state transition.

With reference to the release of QoE measurement collection for MBS broadcast services in RRC_IDLE state, if OAM is not interested in receiving QoE measurements for MBS broadcast services from UEs anymore (e.g., because it has enough QoE information for those services), then OAM initiates QMC deactivation of the concerned MBS broadcast services towards CN or RAN. The gNBs of the RAN will then release the concerned QoE measurement configurations for MBS broadcast services to the UEs by using dedicated RRC signaling for UEs in the RRC connected state or the RRC inactive state; and by using broadcast signaling for UEs in the RRC idle state. In detail, the gNB will broadcast a list of the concerned QoE measurement configurations for MBS broadcast services to release, and each entry of the list is given by the *qoe-Reference* value. The broadcast of the list of the concerned configurations to release can be provided in a new SIB, or alternatively, can be provided in one of the existing SIBs.

A UE in the RRC idle state that is collecting QoE measurements for MBS broadcast services acquires the new broadcast signaling, and accordingly, the UE will release the QoE measurement configuration(s) for which the QoE reference value is equal to the QoE reference value provided per broadcast signaling. As a result, the UE will then also stop any measurement collection for the released QoE measurement configuration(s) and discard any stored QoE measurement reports associated with the released QoE measurement configuration(s) from its AS layer buffer. With reference to triggering the transmission of collected MBS QoE measurements in the RRC_IDLE state, as part of the UE capability information transfer procedure, the MBS-capable UE indicates to the network the maximum supported AS layer buffer size capability for storing MBS QoE measurements in the RRC idle state called *qoe-mbs-bufferSize-IdleState.* The candidate values are then 64 kBytes, 128 kBytes, or 256 kBytes.

Based on the received value for the *qoe-mbs-bufferSize-IdleState,* the network configures an AS layer reporting interval *qoe-mbs-reportInterval-IdleState* for triggering the transmission of collected MBS QoE measurements in the RRC idle state. This is done by adding the AS layer reporting interval parameter in a QoE measurement configuration to setup for MBS broadcast services (i.e. using the field *appLayerMeasConfig* in the *RRCReconfiguration* message). The parameter *qoe-mbs-reportInterval-IdleState* is given as a percentage level in relation to the new UE capability *goe-mbs-bufferSize-IdleState* (i.e., a UE maximum supported AS layer buffer size for storing MBS QoE measurements in RRC_IDLE). Candidate values are then{n50 (e.g., 50%), n60, n70, n80, n90, n100}. For instance, a value of "n50" means that the UE shall trigger the measurement transmission to the network if the size of collected MBS QoE measurements in RRC_IDLE reaches 50% of the AS layer buffer size. Similarly, a value of "n60" means that the UE shall trigger the measurement transmission to the network if the size of collected MBS QoE measurements in RRC_IDLE reaches 60% of the AS layer buffer size, and so on. If the AS layer reporting interval parameter is absent, then the UE shall trigger the measurement transmission to the network whenever the UE AS layer receives MBS QoE measurements from its application layer.

With further reference to the configuration of QoE measurement collection for MBS broadcast services and triggering the transmission of collected measurements in the RRC idle state, assumptions are made for implementations. For example, both the network and the UE support MBS and QMC. The OAM is interested in receiving QoE measurements for an MBS broadcast service identified by the *qoe-Reference* set to "262" (for MCC), "06" (for MNC) and "000004" (for QMC ID, value given in hexa-decimal), from UEs which are being served in the PLMN, and sends a "Configure QoE measurement" message, including the QoE measurement configuration for the concerned MBS broadcast service, to CN. In accordance with the received QoE measurement configuration from OAM, the CN sends to gNB an "Activate QoE measurement" message including the QoE measurement configuration for the concerned MBS broadcast service.

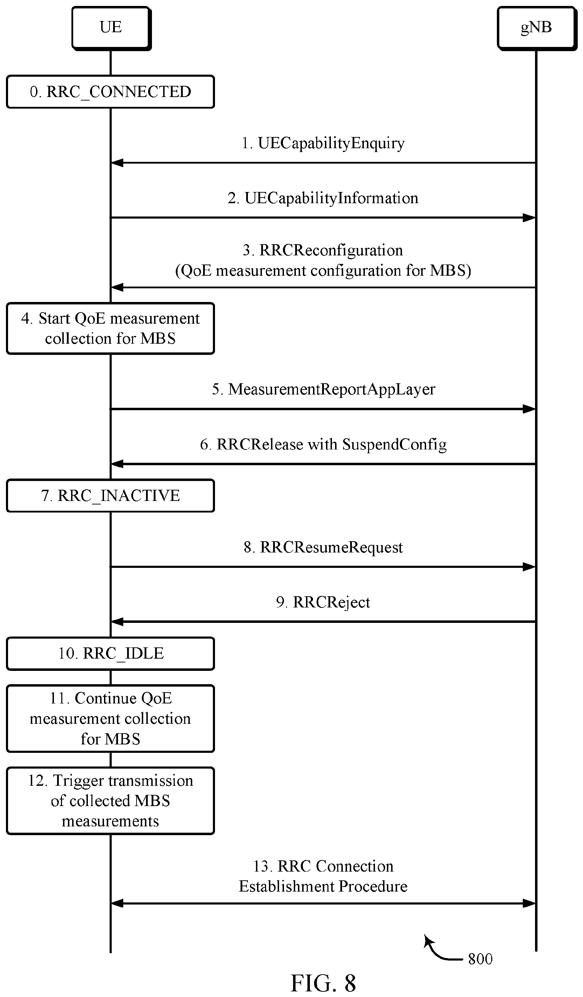

FIG. 8 illustrates an example of a signaling flow diagram 800 for configuration of QoE measurement collection for MBS broadcast services and triggering the transmission of collected measurements in RRC idle state, which supports QoE measurements collection in accordance with aspects of the present disclosure. In the signaling diagram (at step 0), the UE is in a connected state and is receiving an MBS broadcast service. To determine whether the UE is qualified for the QoE measurement collection of the concerned MBS broadcast service, the gNB (at step 1) sends to the UE the *UECapabilityEnquiry* message to request UE radio access capabilities for NR, including its QMC capabilities. The UE (at step 2) responds to the *UECapabilityEnquiry* message by sending the *UECapabilityInformation* message, including the QMC capability for MBS broadcast services and maximum supported AS layer buffer size capability for storing MBS QoE measurements in RRC_IDLE set to a value of 128 kBytes.

Based on the information received from the UE, the gNB (at step 3) determines that the UE is qualified for QoE measurement collection for the concerned MBS broadcast service and sends the *RRCReconfiguration* message containing the respective QoE measurement configuration. Accordingly, the field *appLayerMeasConfig* in the *RRCReconfiguration* message contains the following parameters for the QoE measurement configuration to setup: *measConfigAppLayerId* set to the value "1"; *measConfigAppLayerContainer* contains the QoE measurement configuration for MBS broadcast services encapsulated in a container; *serviceType* set to the value "mbs-broadcast"; *qoe-Reference* set to "262 06 000004" (MCC + MNC + QMC ID); *applicableRRC-States* set to the value "all states" (i.e., the received QoE measurement configuration is applicable in the RRC connected state, the RRC inactive state, and the RRC idle state; and *qoe-mbs-reportInterval-IdleState* set to the value "n60" (i.e., in the idle state, the UE shall trigger the measurement transmission to the network if the size of collected measurements reaches 60% of the AS layer buffer size.

The UE AS layer (at step 4) sends the received QoE measurement configuration to its application layer, which starts QoE measurement collection in accordance with the received QoE measurement configuration and received MBS broadcast service. According to the configured reporting interval in the QoE measurement configuration, the UE application layer (at step 5) sends first collected measurement results to its AS layer in a QoE measurement report. The UE AS layer sends the QoE measurement report via the *MeasurementReportAppLayer* message to the gNB, and the gNB forwards the received QoE measurement report to MCE (not shown in the figure).

Due to low UE activity in the connected state, the gNB (at step 6) sends the *RRCRelease* message with suspend configuration to transfer the UE to the inactive state. The UE in inactive state (at step 7) continues with reception of the MBS broadcast service and with the QoE measurement collection. In order to send further collected measurement results received from its application layer to the gNB, the UE AS layer (at step 8) sends the *RRCResumeRequest* message to the gNB to request the resumption of the suspended RRC connection. Due to temporary RAN congestion, the gNB (at step 9) sends the *RRCReject* message to the UE to reject the RRC connection resumption. In response to the received *RRCReject* message, the UE (at step 10) moves to the idle state. The UE in the idle state (at step 11) continues with reception of the MBS broadcast service and with QoE measurement collection according to the configuration received in connected state. The UE stores the collected MBS QoE measurements in its AS layer buffer, and (at step 12), the UE AS layer buffer reaches 60% of its capacity, which triggers the UE AS layer to transmit the stored MBS QoE measurements to the gNB. In order to send the stored MBS QoE measurements to the gNB (at step 13), the UE and gNB initiate an RRC connection establishment procedure.

With further reference to the release of QoE measurement collection for MBS broadcast services in the RRC_IDLE state, assumptions are made in implementations. For example, it is assumed that the MBS-capable UE is receiving an MBS broadcast service and has been configured by the network for QoE measurement collection for MBS broadcast services in the connected state with the following parameter settings: *goe-Reference* set to "262 06 000004" (MCC plus MNC plus QMC ID); and *applicableRRC-States* set to the value "all states" (i.e., the received QoE measurement configuration is applicable in the RRC connected state, the RRC inactive state, and the RRC idle state).

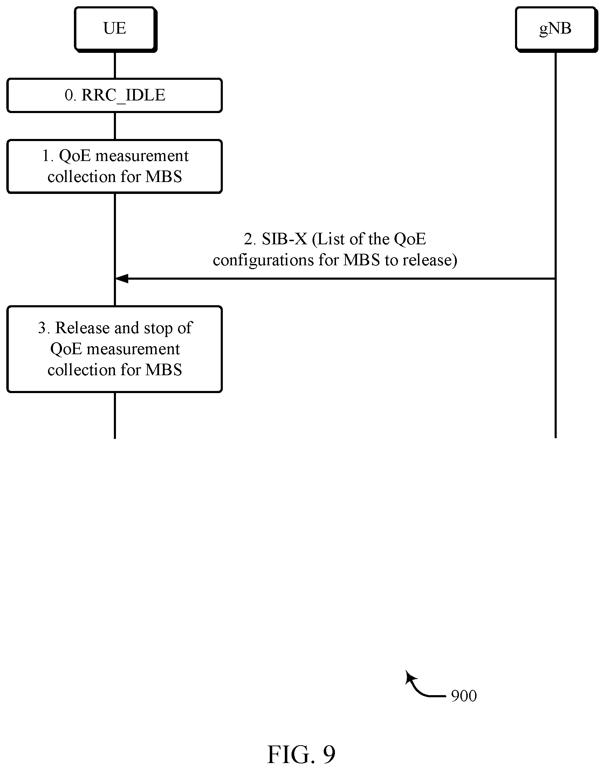

**FIG. 9** illustrates an example of a signaling flow diagram 900 for release of QoE measurement collection for MBS broadcast services in RRC idle state, which supports QoE measurements collection in accordance with aspects of the present disclosure. The UE starts with QoE measurement collection for MBS broadcast services in the connected state according to the configuration received. The UE (at steps 0, 1) is in the idle state and continues receiving the MBS broadcast service and the QoE measurement collection for MBS broadcast services according to the configuration received in the connected state. The OAM (at step 2) is not interested in receiving QoE measurements for MBS broadcast services from UEs anymore (e.g., because it has enough QoE information for those services, and initiates QMC deactivation of the concerned MBS broadcast services towards CN or RAN). In order to release the concerned QoE measurement configurations for UEs in the idle state, each gNB of the RAN broadcasts per SIB-X the following list of configurations:
Entry #1: *"qoe-Reference"* set to "262 06 000001" (MCC + MNC + QMC ID)
Entry #2: *"qoe-Reference"* set to "262 06 000004" (MCC + MNC + QMC ID)
Entry #3: *"qoe-Reference"* set to "262 06 00000A" (MCC + MNC + QMC ID)
Entry #4: *"qoe-Reference"* set to "262 06 00001F" (MCC + MNC + QMC ID)

The UE (at step 3) acquires SIB-X and determines that its current QoE measurement configuration belongs to the list of configurations to release (given by entry #2). As a result, it releases the concerned QoE measurement configuration, stops any measurement collection for the released QoE measurement configuration, and discards any stored QoE measurement reports associated with the released QoE measurement configuration from its AS layer buffer.

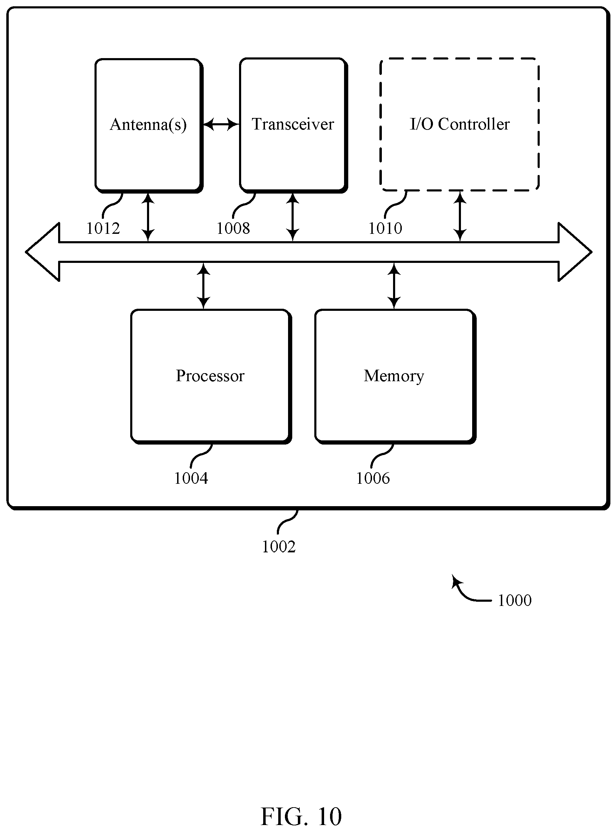

**FIG. 10** illustrates an example of a block diagram 1000 of a device 1002 that supports QoE measurements collection in accordance with aspects of the present disclosure. The device 1002 may be an example of a UE 104 as described herein. The device 1002 may support wireless communication with one or more network entities 102, UEs 104, or any combination thereof. The device 1002 may include components for bi-directional communications including components for transmitting and receiving communications, such as a processor 1004, a memory 1006, a transceiver 1008, and an I/O controller 1010. These components may be in electronic communication or otherwise coupled (e.g., operatively, communicatively, functionally, electronically, electrically) via one or more interfaces (e.g., buses).

The processor 1004, the memory 1006, the transceiver 1008, or various combinations thereof or various components thereof may be examples of means for performing various aspects of the present disclosure as described herein. For example, the processor 1004, the memory 1006, the transceiver 1008, or various combinations or components thereof may support a method for performing one or more of the operations described herein.

In some implementations, the processor 1004, the memory 1006, the transceiver 1008, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1004 and the memory 1006 coupled with the processor 1004 may be configured to perform one or more of the functions described herein (e.g., executing, by the processor 1004, instructions stored in the memory 1006).

For example, the processor 1004 may support wireless communication at the device 1002 in accordance with examples as disclosed herein. The processor 1004 may be configured as or otherwise support a means for receiving a first signaling as a request for QoE measurements collection capabilities supported by a UE; transmitting a second signaling indicating a maximum AS layer buffer size capability for storing the QoE measurements in an RRC idle state; and receiving a third signaling indicating a configuration for collecting the QoE measurements for at least one MBS.

Additionally, the processor 1004 may be configured as or otherwise support any one or combination of collecting the QoE measurements for the at least one MBS as collected QoE measurements; and transmitting a fourth signaling of the collected QoE measurements. The first signaling, the second signaling, the third signaling, and the fourth signaling are communicated in a RRC connected state. The configuration for collecting the QoE measurements includes a session identity of a QoE measurements collection session, one or more RRC states of the QoE measurements collection session, and an AS layer reporting interval that triggers a transmission of collected QoE measurements associated with the QoE measurements collection session in the RRC idle state. The AS layer reporting interval is designated as a percentage relative to the maximum AS layer buffer size capability for storing the QoE measurements in the RRC idle state. The method further comprising receiving a fourth signaling indicating release information associated with a release of one or more QoE measurement collection sessions for MBSs in the RRC idle state. The method further comprising determining whether to release at least one of the QoE measurement collection sessions for at least one of the MBSs based at least in part on the release information. The method further comprising stopping the QoE measurement collection for a released QoE measurement collection session; and discarding stored QoE measurement reports associated with the released QoE measurement collection session from the AS layer buffer. The release information comprises a list of session identities of the one or more QoE measurement collection sessions indicating the release of the one or more QoE measurement collection sessions for MBSs in the RRC idle state. The release information is received as broadcast in a system information message. The system information message is received in the RRC idle state.

Additionally, or alternatively, the device 1002, in accordance with examples as disclosed herein, may include an apparatus for wireless communication, comprising a processor; and a memory coupled with the processor, the processor configured to: receive a first signaling as a request for QoE measurements collection capabilities supported by the apparatus; transmit a second signaling indicating a maximum AS layer buffer size capability for storing the QoE measurements in an RRC idle state; and receive a third signaling indicating a configuration for collecting the QoE measurements for at least one MBS.

Additionally, the wireless communication at the device 1002 may include any one or combination of the processor is configured to collect the QoE measurements for the at least one MBS as collected QoE measurements; and transmit a fourth signaling of the collected QoE measurements. The first signaling, the second signaling, the third signaling, and the fourth signaling are communicated in a RRC connected state. The configuration for collecting the QoE measurements includes a session identity of a QoE measurements collection session, one or more RRC states of the QoE measurements collection session, and an AS layer reporting interval that triggers a transmission of collected QoE measurements associated with the QoE measurements collection session in the RRC idle state. The AS layer reporting interval is designated as a percentage relative to the maximum AS layer buffer size capability for storing the QoE measurements in the RRC idle state. The processor is configured to receive a fourth signaling indicating release information associated with a release of one or more QoE measurement collection sessions for MBSs in the RRC idle state. The processor is configured to determine whether to release at least one of the QoE measurement collection sessions for at least one of the MBSs based at least in part on the release information. The processor is configured to stop the QoE measurement collection for a released QoE measurement collection session; and discard stored QoE measurement reports associated with the released QoE measurement collection session from the AS layer buffer. The release information comprises a list of session identities of the one or more QoE measurement collection sessions indicating the release of the one or more QoE measurement collection sessions for MBSs in the RRC idle state. The release information is received as broadcast in a system information message. The system information message is received in the RRC idle state.

The processor 1004 of the device 1002, such as a UE 104, may support wireless communication in accordance with examples as disclosed herein. The processor 1004 includes at least one controller coupled with at least one memory, and is configured to or operable to cause the processor to receive a first signaling as a request for QoE measurements collection capabilities supported by a UE; transmit a second signaling indicating a maximum AS layer buffer size capability for storing the QoE measurements in a RRC idle state; and receive a third signaling indicating a configuration for collecting the QoE measurements for at least one MBS.

The processor 1004 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1004 may be configured to operate a memory array using a memory controller. In some other implementations, a memory controller may be integrated into the processor 1004. The processor 1004 may be configured to execute computer-readable instructions stored in a memory (e.g., the memory 1006) to cause the device 1002 to perform various functions of the present disclosure.

The memory 1006 may include random access memory (RAM) and read-only memory (ROM). The memory 1006 may store computer-readable, computer-executable code including instructions that, when executed by the processor 1004 cause the device 1002 to perform various functions described herein. The code may be stored in a non-transitory computer-readable medium such as system memory or another type of memory. In some implementations, the code may not be directly executable by the processor 1004 but may cause a computer (e.g., when compiled and executed) to perform functions described herein. In some implementations, the memory 1006 may include, among other things, a basic I/O system (BIOS) which may control basic hardware or software operation such as the interaction with peripheral components or devices.

The I/O controller 1010 may manage input and output signals for the device 1002. The I/O controller 1010 may also manage peripherals not integrated into the device M02. In some implementations, the I/O controller 1010 may represent a physical connection or port to an external peripheral. In some implementations, the I/O controller 1010 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1010 may be implemented as part of a processor, such as the processor 1004. In some implementations, a user may interact with the device 1002 via the I/O controller 1010 or via hardware components controlled by the I/O controller 1010.

In some implementations, the device 1002 may include a single antenna 1012. However, in some other implementations, the device 1002 may have more than one antenna 1012 (i.e., multiple antennas), including multiple antenna panels or antenna arrays, which may be capable of concurrently transmitting or receiving multiple wireless transmissions. The transceiver 1008 may communicate bi-directionally, via the one or more antennas 1012, wired, or wireless links as described herein. For example, the transceiver 1008 may represent a wireless transceiver and may communicate bi-directionally with another wireless transceiver. The transceiver 1008 may also include a modem to modulate the packets, to provide the modulated packets to one or more antennas 1012 for transmission, and to demodulate packets received from the one or more antennas 1012.

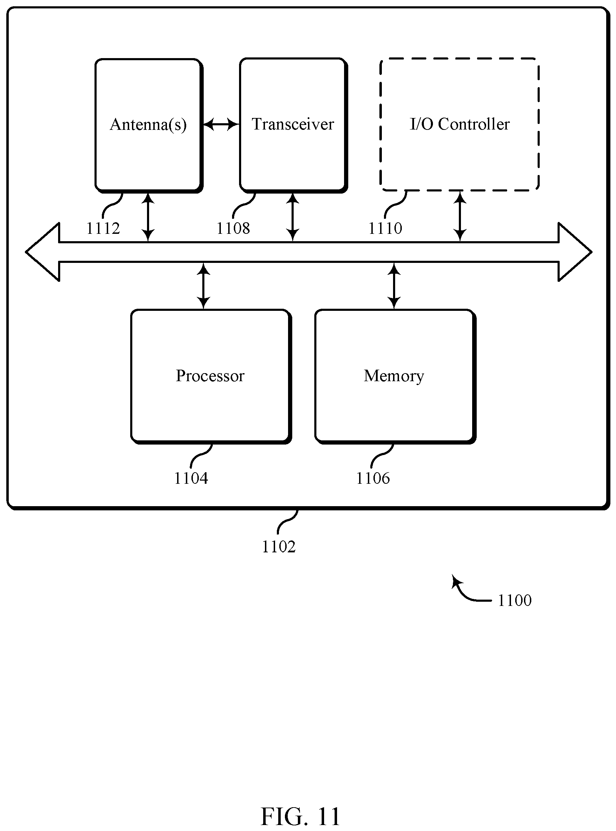

**FIG. 11** illustrates an example of a block diagram 1100 of a device 1102 that supports QoE measurements collection in accordance with aspects of the present disclosure. The device 1102 may be an example of a network entity 102 (e.g., a base station) as described herein. The device 1102 may support wireless communication with one or more network entities 102, UEs 104, or any combination thereof. The device 1102 may include components for bi-directional communications including components for transmitting and receiving communications, such as a processor 1104, a memory 1106, a transceiver 1108, and an I/O controller 1110. These components may be in electronic communication or otherwise coupled (e.g., operatively, communicatively, functionally, electronically, electrically) via one or more interfaces (e.g., buses).

The processor 1104, the memory 1106, the transceiver 1108, or various combinations thereof or various components thereof may be examples of means for performing various aspects of the present disclosure as described herein. For example, the processor 1104, the memory 1106, the transceiver 1108, or various combinations or components thereof may support a method for performing one or more of the operations described herein.

In some implementations, the processor 1104, the memory 1106, the transceiver 1108, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1104 and the memory 1106 coupled with the processor 1104 may be configured to perform one or more of the functions described herein (e.g., executing, by the processor 1104, instructions stored in the memory 1106).

For example, the processor 1104 may support wireless communication at the device 1102 in accordance with examples as disclosed herein. The processor 1104 may be configured as or otherwise support a means for transmitting a first signaling to a UE as a request for QoE measurements collection capabilities supported by the UE; receiving a second signaling indicating a maximum AS layer buffer size capability of the UE for storing the QoE measurements in an RRC idle state; and transmitting a third signaling indicating a configuration of the UE for collecting the QoE measurements for at least one MBS.

Additionally, the processor 1104 may be configured as or otherwise support any one or combination of determining whether to configure the UE for the collecting the QoE measurements for the at least one MBS. The method further comprising receiving a fourth signaling of collected QoE measurements as collected by the UE for the at least one MBS. The first signaling, the second signaling, the third signaling, and the fourth signaling are communicated in a RRC connected state. The configuration for collecting the QoE measurements includes a session identity of a QoE measurements collection session, one or more RRC states of the QoE measurements collection session, and an AS layer reporting interval that triggers a transmission by the UE of collected QoE measurements associated with the QoE measurements collection session in the RRC idle state. The AS layer reporting interval is designated as a percentage relative to the maximum AS layer buffer size capability of the UE for storing the QoE measurements in the RRC idle state. The method further comprising transmitting a fourth signaling indicating release information associated with a release of one or more QoE measurement collection sessions for MBSs in the RRC idle state. The release information comprises a list of session identities of the one or more QoE measurement collection sessions indicating the release of the one or more QoE measurement collection sessions for MBSs in the RRC idle state. The release information is transmitted as broadcast in a system information message. The system information message is transmitted to the UE in the RRC idle state.

Additionally, or alternatively, the device 1102, in accordance with examples as disclosed herein, may include an apparatus for wireless communication, comprising a processor; and a memory coupled with the processor, the processor configured to: transmit a first signaling to a UE as a request for QoE measurements collection capabilities supported by the UE; receive a second signaling indicating a maximum AS layer buffer size capability of the UE for storing the QoE measurements in an RRC idle state; and transmit a third signaling indicating a configuration of the UE for collecting the QoE measurements for at least one MBS.

Additionally, the wireless communication at the device 1102 may include any one or combination of the processor is configured to determine whether to configure the UE for the collecting the QoE measurements for the at least one MBS. The processor is configured to receive a fourth signaling of collected QoE measurements as collected by the UE for the at least one MBS. The first signaling, the second signaling, the third signaling, and the fourth signaling are communicated in a RRC connected state. The configuration for collecting the QoE measurements includes a session identity of a QoE measurements collection session, one or more RRC states of the QoE measurements collection session, and an AS layer reporting interval that triggers a transmission by the UE of collected QoE measurements associated with the QoE measurements collection session in the RRC idle state. The AS layer reporting interval is designated as a percentage relative to the maximum AS layer buffer size capability of the UE for storing the QoE measurements in the RRC idle state. The processor is configured to transmit a fourth signaling indicating release information associated with a release of one or more QoE measurement collection sessions for MBSs in the RRC idle state. The release information comprises a list of session identities of the one or more QoE measurement collection sessions indicating the release of the one or more QoE measurement collection sessions for MBSs in the RRC idle state. The release information is transmitted as broadcast in a system information message. The system information message is transmitted to the UE in the RRC idle state.

The processor 1104 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1104 may be configured to operate a memory array using a memory controller. In some other implementations, a memory controller may be integrated into the processor 1104. The processor 1104 may be configured to execute computer-readable instructions stored in a memory (e.g., the memory 1106) to cause the device 1102 to perform various functions of the present disclosure.

The memory 1106 may include random access memory (RAM) and read-only memory (ROM). The memory 1106 may store computer-readable, computer-executable code including instructions that, when executed by the processor 1104 cause the device 1102 to perform various functions described herein. The code may be stored in a non-transitory computer-readable medium such as system memory or another type of memory. In some implementations, the code may not be directly executable by the processor 1104 but may cause a computer (e.g., when compiled and executed) to perform functions described herein. In some implementations, the memory 1106 may include, among other things, a basic I/O system (BIOS) which may control basic hardware or software operation such as the interaction with peripheral components or devices.

The I/O controller 1110 may manage input and output signals for the device 1102. The I/O controller 1110 may also manage peripherals not integrated into the device M02. In some implementations, the I/O controller 1110 may represent a physical connection or port to an external peripheral. In some implementations, the I/O controller 1110 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1110 may be implemented as part of a processor, such as the processor 1104. In some implementations, a user may interact with the device 1102 via the I/O controller 1110 or via hardware components controlled by the I/O controller 1110.

In some implementations, the device 1102 may include a single antenna 1112. However, in some other implementations, the device 1102 may have more than one antenna 1112 (i.e., multiple antennas), including multiple antenna panels or antenna arrays, which may be capable of concurrently transmitting or receiving multiple wireless transmissions. The transceiver 1108 may communicate bi-directionally, via the one or more antennas 1112, wired, or wireless links as described herein. For example, the transceiver 1108 may represent a wireless transceiver and may communicate bi-directionally with another wireless transceiver. The transceiver 1108 may also include a modem to modulate the packets, to provide the modulated packets to one or more antennas 1112 for transmission, and to demodulate packets received from the one or more antennas 1112.

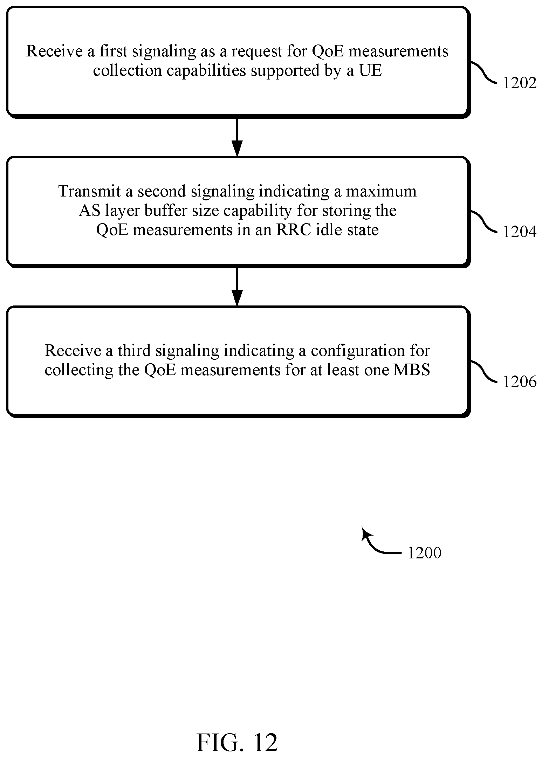

**FIG. 12** illustrates a flowchart of a method 1200 that supports QoE measurements collection in accordance with aspects of the present disclosure. The operations of the method 1200 may be implemented by a device or its components as described herein. For example, the operations of the method 1200 may be performed by a UE 104 as described with reference to FIGs. 1 through 11. In some implementations, the device may execute a set of instructions to control the function elements of the device to perform the described functions. Additionally, or alternatively, the device may perform aspects of the described functions using special-purpose hardware.

At 1202, the method may include receiving a first signaling as a request for QoE measurements collection capabilities supported by a UE. The operations of 1202 may be performed in accordance with examples as described herein. In some implementations, aspects of the operations of 1202 may be performed by a device as described with reference to FIG. 1.

At 1204, the method may include transmitting a second signaling indicating a maximum AS layer buffer size capability for storing the QoE measurements in an RRC idle state. The operations of 1204 may be performed in accordance with examples as described herein. In some implementations, aspects of the operations of 1204 may be performed by a device as described with reference to FIG. 1.

At 1206, the method may include receiving a third signaling indicating a configuration for collecting the QoE measurements for at least one MBS. The operations of 1206 may be performed in accordance with examples as described herein. In some implementations, aspects of the operations of 1206 may be performed by a device as described with reference to FIG. 1.

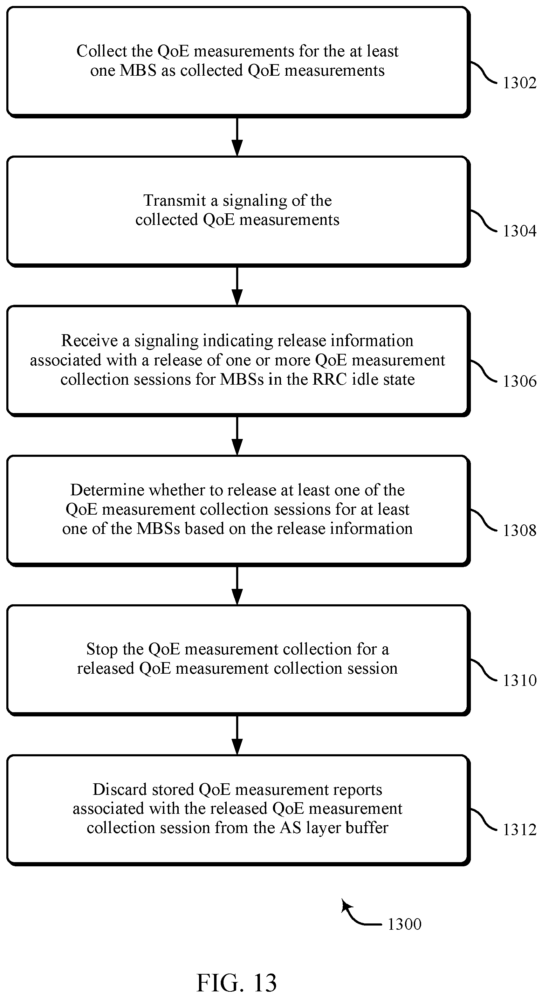

**FIG. 13** illustrates a flowchart of a method 1300 that supports QoE measurements collection in accordance with aspects of the present disclosure. The operations of the method 1300 may be implemented by a device or its components as described herein. For example, the operations of the method 1300 may be performed by a UE 104 as described with reference to FIGs. 1 through 11. In some implementations, the device may execute a set of instructions to control the function elements of the device to perform the described functions. Additionally, or alternatively, the device may perform aspects of the described functions using special-purpose hardware.

At 1302, the method may include collecting the QoE measurements for the at least one MBS as collected QoE measurements. The operations of 1302 may be performed in accordance with examples as described herein. In some implementations, aspects of the operations of 1302 may be performed by a device as described with reference to FIG. 1.

At 1304, the method may include transmitting a signaling of the collected QoE measurements. The operations of 1304 may be performed in accordance with examples as described herein. In some implementations, aspects of the operations of 1304 may be performed by a device as described with reference to FIG. 1.

At 1306, the method may include receiving a signaling indicating release information associated with a release of one or more QoE measurement collection sessions for MBSs in the RRC idle state. The operations of 1306 may be performed in accordance with examples as described herein. In some implementations, aspects of the operations of 1306 may be performed by a device as described with reference to FIG. 1.

At 1308, the method may include determining whether to release at least one of the QoE measurement collection sessions for at least one of the MBSs based on the release information. The operations of 1308 may be performed in accordance with examples as described herein. In some implementations, aspects of the operations of 1308 may be performed by a device as described with reference to FIG. 1.

At 1310, the method may include stopping the QoE measurement collection for a released QoE measurement collection session. The operations of 1310 may be performed in accordance with examples as described herein. In some implementations, aspects of the operations of 1310 may be performed by a device as described with reference to FIG. 1.

At 1312, the method may include discarding stored QoE measurement reports associated with the released QoE measurement collection session from the AS layer buffer. The operations of 1312 may be performed in accordance with examples as described herein. In some implementations, aspects of the operations of 1312 may be performed by a device as described with reference to FIG. 1.

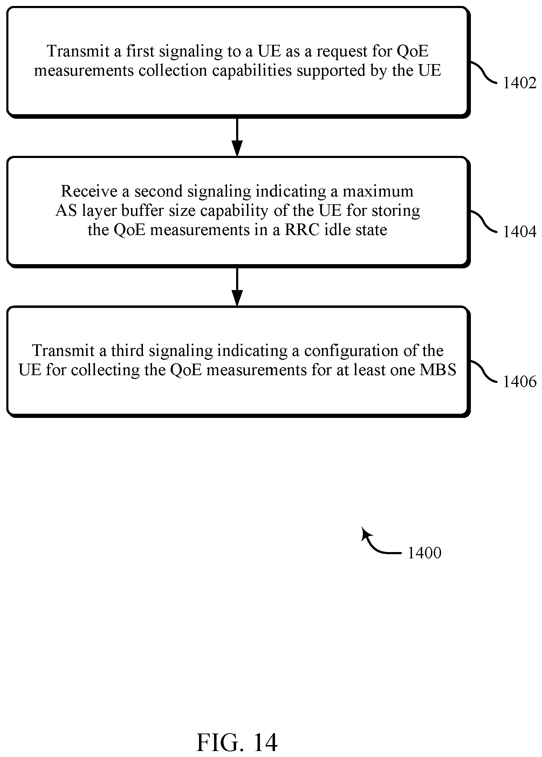

**FIG. 14** illustrates a flowchart of a method 1400 that supports QoE measurements collection in accordance with aspects of the present disclosure. The operations of the method 1400 may be implemented by a device or its components as described herein. For example, the operations of the method 1400 may be performed by a network entity 102 (e.g., a base station) as described with reference to FIGs. 1 through 11. In some implementations, the device may execute a set of instructions to control the function elements of the device to perform the described functions. Additionally, or alternatively, the device may perform aspects of the described functions using special-purpose hardware.

At 1402, the method may include transmitting a first signaling to a UE as a request for QoE measurements collection capabilities supported by the UE. The operations of 1402 may be performed in accordance with examples as described herein. In some implementations, aspects of the operations of 1402 may be performed by a device as described with reference to FIG. 1.

At 1404, the method may include receiving a second signaling indicating a maximum AS layer buffer size capability of the UE for storing the QoE measurements in an RRC idle state. The operations of 1404 may be performed in accordance with examples as described herein. In some implementations, aspects of the operations of 1404 may be performed by a device as described with reference to FIG. 1.

At 1406, the method may include transmitting a third signaling indicating a configuration of the UE for collecting the QoE measurements for at least one MBS. The operations of 1406 may be performed in accordance with examples as described herein. In some implementations, aspects of the operations of 1406 may be performed by a device as described with reference to FIG. 1.

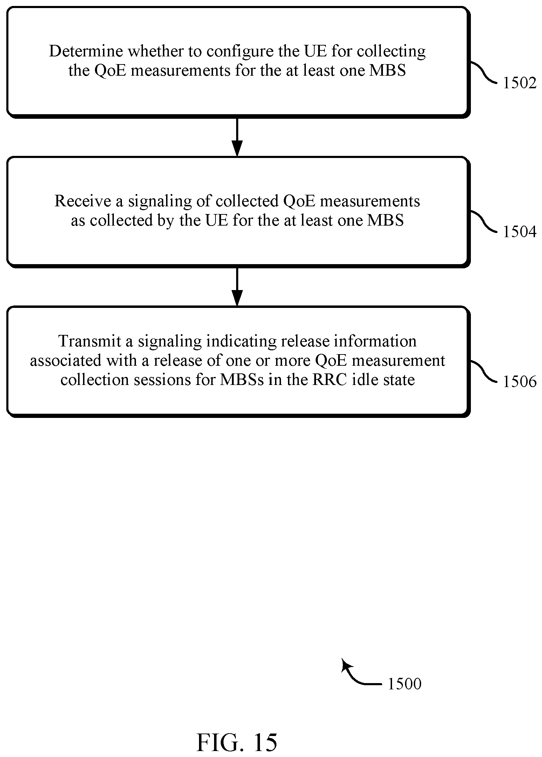

**FIG. 15** illustrates a flowchart of a method 1500 that supports QoE measurements collection in accordance with aspects of the present disclosure. The operations of the method 1500 may be implemented by a device or its components as described herein. For example, the operations of the method 1500 may be performed by a network entity 102 (e.g., a base station) as described with reference to FIGs. 1 through 11. In some implementations, the device may execute a set of instructions to control the function elements of the device to perform the described functions. Additionally, or alternatively, the device may perform aspects of the described functions using special-purpose hardware.

At 1502, the method may include determining whether to configure the UE for collecting the QoE measurements for the at least one MBS. The operations of 1502 may be performed in accordance with examples as described herein. In some implementations, aspects of the operations of 1502 may be performed by a device as described with reference to FIG. 1.

At 1504, the method may include receiving a signaling of collected QoE measurements as collected by the UE for the at least one MBS. The operations of 1504 may be performed in accordance with examples as described herein. In some implementations, aspects of the operations of 1504 may be performed by a device as described with reference to FIG. 1.

At 1506, the method may include transmitting a signaling indicating release information associated with a release of one or more QoE measurement collection sessions for MBSs in the RRC idle state. The operations of 1506 may be performed in accordance with examples as described herein. In some implementations, aspects of the operations of 1506 may be performed by a device as described with reference to FIG. 1.

It should be noted that the methods described herein describe possible implementations, and that the operations and the steps may be rearranged or otherwise modified and that other implementations are possible. Further, aspects from two or more of the methods may be combined.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Similarly, a list of one or more of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on". Further, as used herein, including in the claims, a "set" may include one or more elements.

The terms "transmitting," "receiving," or "communicating," when referring to a network entity, may refer to any portion of a network entity (e.g., a base station, a CU, a DU, a RU) of a RAN communicating with another device (e.g., directly or via one or more other network entities).

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein. For the avoidance of doubt, the scope of the invention is defined by the claims.

## Claims

1. A user equipment "UE" (104; 1002) for wireless communication, comprising:
at least one memory (1006); and
at least one processor (1004) coupled with the at least one memory and configured to cause the UE to:
receive a first signaling as a request for quality of experience "QoE" measurements collection capabilities supported by the UE;
transmit a second signaling indicating a maximum access stratum "AS" layer buffer size capability for storing the QoE measurements in a radio resource control "RRC" idle state or in a RRC inactive state ; and
receive a third signaling indicating a configuration for collecting the QoE measurements for at least one multicast broadcast service "MBS".

2. The UE (104; 1002) of claim 1, wherein the at least one processor (1004) is configured to cause the UE (104; 1002) to:
collect the QoE measurements for the at least one MBS in accordance with the third signaling; and
transmit a fourth signaling of collected QoE measurements.

3. The UE (104; 1002) of claim 2, wherein the first signaling, the second signaling, the third signaling, and the fourth signaling are communicated in a RRC connected state.

4. The UE (104; 1002) of claim 1, wherein the configuration for collecting the QoE measurements includes at least one of:
a session identity of a QoE measurements collection session,
one or more RRC states of the QoE measurements collection session, or
an AS layer reporting interval that triggers a transmission of collected QoE measurements associated with the QoE measurements collection session in the RRC idle state or in the RRC inactive state, and optionally:
wherein the AS layer reporting interval is designated as a percentage relative to the maximum AS layer buffer size capability for storing the QoE measurements in the RRC idle state or in the RRC inactive state.

5. The UE (104; 1002) of claim 4, wherein the session identity of the QoE measurements collection session comprises a mobile country code "MCC", a mobile network code "MNC", and a QoE measurement collection "QMC" identifier.

6. The UE (104; 1002) of claim 1, wherein the at least one processor (1004) is configured to cause the UE (104; 1002) to receive a fourth signaling indicating release information associated with a release of one or more QoE measurement collection sessions for MBSs in the RRC idle state or the RRC inactive state.

7. The UE (104; 1002) of claim 6, wherein the at least one processor (1004) is configured to cause the UE (104; 1002) to determine whether to release at least one of the QoE measurement collection sessions for at least one of the MBSs based at least in part on the release information, the release information including a list of session identities of the one or more QoE measurement collection sessions indicating the release of the one or more QoE measurement collection sessions for the MBSs in the RRC idle state or the RRC inactive state.

8. The UE (104; 1002) of claim 7, wherein the at least one processor (1004) is configured to cause the UE (104; 1002) to:
stop the QoE measurement collection for a released QoE measurement collection session; and
discard stored QoE measurement reports associated with the released QoE measurement collection session from the AS layer buffer.

9. A network entity (102; 1102) for wireless communication, comprising:
at least one processor (1104); and
at least one memory (1106) coupled with the at least one processor, the at least one processor configured to cause the network entity to:
transmit a first signaling to a user equipment "UE" as a request for quality of experience "QoE" measurements collection capabilities supported by the UE;
receive a second signaling indicating a maximum access stratum "AS" layer buffer size capability of the UE for storing the QoE measurements in a radio resource control "RRC" idle state or in a RRC inactive state; and
transmit a third signaling indicating a configuration of the UE for collecting the QoE measurements for at least one multicast broadcast service "MBS".

10. The network entity (102; 1102) of claim 10, wherein the at least one processor (1104) is configured to cause the network entity (102; 1102) to determine whether to configure the UE for the collecting the QoE measurements for the at least one MBS.

11. The network entity (102; 1102) of claim 10, wherein the at least one processor (1104) is configured to cause the network entity (102; 1102) to receive a fourth signaling of collected QoE measurements as collected by the UE for the at least one MBS.

12. The network entity (102; 1102) of claim 10, wherein the configuration for collecting the QoE measurements includes at least one of:
a session identity of a QoE measurements collection session,
one or more RRC states of the QoE measurements collection session, or
an AS layer reporting interval that triggers a transmission by the UE of collected QoE measurements associated with the QoE measurements collection session in the RRC idle state or in the RRC inactive state.

13. The network entity (102; 1102) of claim 10, wherein the at least one processor (1104) is configured to cause the network entity (102; 1102) to transmit a fourth signaling indicating release information associated with a release of one or more QoE measurement collection sessions for MBSs in the RRC idle state or in the RRC inactive state.

14. The network entity (102; 1102) of claim 14, wherein the release information comprises a list of session identities of the one or more QoE measurement collection sessions indicating the release of the one or more QoE measurement collection sessions for the MBSs in the RRC idle state or in the RRC inactive state.

15. A method performed by a user equipment "UE" (104; 1002), comprising:
receiving a first signaling as a request for quality of experience "QoE" measurements collection capabilities supported by the UE;
transmitting a second signaling indicating a maximum access stratum "AS" layer buffer size capability for storing the QoE measurements in a radio resource control "RRC" idle state or in a RRC inactive state; and
receiving a third signaling indicating a configuration for collecting the QoE measurements for at least one multicast broadcast service "MBS".

## Patentansprüche

1. Benutzerausrüstung "UE" (104; 1002) für drahtlose Kommunikation, umfassend:
mindestens einen Speicher (1006); und
mindestens einen Prozessor (1004), der mit dem mindestens einen Speicher gekoppelt und dazu konfiguriert ist, die UE zu Folgendem zu veranlassen:
Empfangen einer ersten Signalisierung als eine Anforderung von Erlebnisqualitäts-, "QoE"-, Messungserfassungskapazitäten, die von der UE unterstützt werden;
Übertragen einer zweiten Signalisierung, die eine maximale Zugriffsebenen-, "AS"-, Schicht-Puffergrößenkapazität zum Speichern der QoE-Messungen in einem Funkressourcensteuerungs-, "RRC"-, Ruhezustand oder in einem inaktiven RRC-Zustand angibt; und
Empfangen einer dritten Signalisierung, die eine Konfiguration zum Erfassen der QoE-Messungen für mindestens einen Multicast-Broadcast-Dienst "MBS" angibt.

2. UE (104; 1002) nach Anspruch 1, wobei der mindestens eine Prozessor (1004) dazu konfiguriert ist, die UE (104; 1002) zu Folgendem zu veranlassen:
Erfassen der QoE-Messungen für den mindestens einen MBS in Übereinstimmung mit der dritten Signalisierung; und
Übertragen einer vierten Signalisierung erfasster QoE-Messungen.

3. UE (104; 1002) nach Anspruch 2, wobei die erste Signalisierung, die zweite Signalisierung, die dritte Signalisierung und die vierte Signalisierung in einem verbundenen RRC-Zustand übermittelt werden.

4. UE (104; 1002) nach Anspruch 1, wobei die Konfiguration zum Erfassen der QoE-Messungen mindestens eines des Folgenden beinhaltet:
eine Sitzungsidentität einer QoE-Messungserfassungssitzung,
einen oder mehrere RRC-Zustände der QoE-Messungserfassungssitzung, oder
ein AS-Schicht-Meldeintervall, das eine Übertragung erfasster QoE-Messungen auslöst, die mit der QoE-Messungserfassungssitzung im RRC-Ruhezustand oder im inaktiven RRC-Zustand verknüpft sind, und optional:
wobei das AS-Schicht-Meldeintervall als ein Prozentsatz relativ zur maximalen AS-Schicht-Puffergrößenkapazität zum Speichern der QoE-Messungen im RRC-Ruhezustand oder im inaktiven RRC-Zustand angegeben wird.

5. UE (104; 1002) nach Anspruch 4, wobei die Sitzungsidentität der QoE-Messungserfassungssitzung einen Mobilfunk-Ländercode "MCC", einen Mobilfunknetzcode "MNC" und eine QoE-Messungserfassungs-, "QMC"-, Kennung umfasst.

6. UE (104; 1002) nach Anspruch 1, wobei der mindestens eine Prozessor (1004) dazu konfiguriert ist, die UE (104; 1002) zu veranlassen, eine vierte Signalisierung zu empfangen, die Freigabeinformationen angibt, die mit einer Freigabe einer oder mehrerer QoE-Messerfassungssitzungen für MBSs im RRC-Ruhezustand oder im inaktiven RRC-Zustand verknüpft sind.

7. UE (104; 1002) nach Anspruch 6, wobei der mindestens eine Prozessor (1004) dazu konfiguriert ist, die UE (104; 1002) zu veranlassen, mindestens teilweise basierend auf den Freigabeinformationen zu bestimmen, ob mindestens eine der QoE-Messerfassungssitzungen für mindestens einen der MBSs freigegeben werden soll, wobei die Freigabeinformationen eine Liste von Sitzungsidentitäten der einen oder mehreren QoE-Messerfassungssitzungen beinhalten, die die Freigabe der einen oder mehreren QoE-Messerfassungssitzungen für die MBSs im RRC-Ruhezustand oder im inaktiven RRC-Zustand angeben.

8. UE (104; 1002) nach Anspruch 7, wobei der mindestens eine Prozessor (1004) dazu konfiguriert ist, die UE (104; 1002) zu Folgendem zu veranlassen:
Beenden der QoE-Messungserfassung für eine freigegebene QoE-Messungserfassungssitzung; und
Verwerfen gespeicherter QoE-Messungsberichte, die mit der freigegebenen QoE-Messerfassungssitzung verknüpft sind, aus dem AS-Schicht-Puffer.

9. Netzwerkeinheit (102; 1102) für drahtlose Kommunikation, umfassend:
mindestens einen Prozessor (1104); und
mindestens einen Speicher (1106), der mit dem mindestens einen Prozessor gekoppelt, wobei der mindestens eine Prozessor dazu konfiguriert ist, die Netzwerkeinheit zu Folgendem zu veranlassen:
Übertragen einer ersten Signalisierung an eine Benutzerausrüstung "UE" als eine Anforderung von Erlebnisqualitäts-, "QoE"-, Messungserfassungskapazitäten, die von der UE unterstützt werden;
Empfangen einer zweiten Signalisierung, die eine maximale Zugriffsebenen-, "AS"-, Schicht-Puffergrößenkapazität der UE zum Speichern der QoE-Messungen in einem Funkressourcensteuerungs-, "RRC"-, Ruhezustand oder in einem inaktiven RRC-Zustand angibt; und
Übertragen einer dritten Signalisierung, die eine Konfiguration der UE zum Erfassen der QoE-Messungen für mindestens einen Multicast-Broadcast-Dienst "MBS" angibt.

10. Netzwerkeinheit (102; 1102) nach Anspruch 10, wobei der mindestens eine Prozessor (1104) dazu konfiguriert ist, die Netzwerkeinheit (102; 1102) zu veranlassen, zu bestimmen, ob die UE für die Erfassung der QoE-Messungen für den mindestens einen MBS konfiguriert werden soll.

11. Netzwerkeinheit (102; 1102) nach Anspruch 10, wobei der mindestens eine Prozessor (1104) dazu konfiguriert ist, die Netzwerkeinheit (102; 1102) zu veranlassen, eine vierte Signalisierung erfasster QoE-Messungen zu empfangen, wie sie von der UE für den mindestens einen MBS erfasst wurden.

12. Netzwerkeinheit (102; 1102) nach Anspruch 10, wobei die Konfiguration zum Erfassen der QoE-Messungen mindestens eines des Folgenden beinhaltet:
eine Sitzungsidentität einer QoE-Messungserfassungssitzung,
einen oder mehrere RRC-Zustände der QoE-Messungserfassungssitzung, oder
ein AS-Schicht-Meldeintervall, das eine Übertragung durch die UE erfasster QoE-Messungen auslöst, die mit der QoE-Messungserfassungssitzung im RRC-Ruhezustand oder im inaktiven RRC-Zustand verknüpft sind.

13. Netzwerkeinheit (102; 1102) nach Anspruch 10, wobei der mindestens eine Prozessor (1104) dazu konfiguriert ist, die Netzwerkeinheit (102; 1102) zu veranlassen, eine vierte Signalisierung zu übertragen, die Freigabeinformationen angibt, die mit einer Freigabe einer oder mehrerer QoE-Messerfassungssitzungen für MBSs im RRC-Ruhezustand oder im inaktiven RRC-Zustand verknüpft sind.

14. Netzwerkeinheit (102; 1102) nach Anspruch 14, wobei die Freigabeinformationen eine Liste von Sitzungsidentitäten der einen oder mehreren QoE-Messungserfassungssitzungen umfassen, die die Freigabe der einen oder mehreren QoE-Messungserfassungssitzungen für die MBSs im RRC-Ruhezustand oder im inaktiven RRC-Zustand angeben.

15. Verfahren, durchgeführt von einer Benutzerausrüstung "UE" (104; 1002), umfassend:
Empfangen einer ersten Signalisierung als eine Anforderung von Erlebnisqualitäts-, "QoE"-, Messungserfassungskapazitäten, die von der UE unterstützt werden;
Übertragen einer zweiten Signalisierung, die eine maximale Zugriffsebenen-, "AS"-, Schicht-Puffergrößenkapazität zum Speichern der QoE-Messungen in einem Funkressourcensteuerungs-, "RRC"-, Ruhezustand oder in einem inaktiven RRC-Zustand angibt; und
Empfangen einer dritten Signalisierung, die eine Konfiguration zum Erfassen der QoE-Messungen für mindestens einen Multicast-Broadcast-Dienst "MBS" angibt.

## Revendications

1. Équipement utilisateur, « UE », (104 ; 1002) pour une communication sans fil, comprenant :
au moins une mémoire (1006) ; et
au moins un processeur (1004) couplé à la au moins une mémoire et configuré pour amener l'UE à :
recevoir une première signalisation sous forme d'une demande de capacités de collecte de mesures de qualité d'expérience, « QoE », prises en charge par l'UE ;
transmettre une deuxième signalisation indiquant une capacité de taille de tampon de couche de strate d'accès, « AS », maximale pour stocker les mesures de QoE dans un état de veille de commande de ressources radio « RRC » ou dans un état inactif de RRC ; et
recevoir une troisième signalisation indiquant une configuration pour collecter les mesures de QoE pour au moins un service de diffusion/multidiffusion, « MBS ».

2. UE (104 ; 1002) selon la revendication 1, dans lequel le au moins un processeur (1004) est configuré pour amener l'UE (104 ; 1002) à :
collecter les mesures de QoE pour le au moins un MBS selon la troisième signalisation ; et
transmettre une quatrième signalisation des mesures de QoE collectées.

3. UE (104 ; 1002) selon la revendication 2, dans lequel la première signalisation, la deuxième signalisation, la troisième signalisation et la quatrième signalisation sont communiquées dans un état connecté de RRC.

4. UE (104 ; 1002) selon la revendication 1, dans lequel la configuration de collecte des mesures de QoE comprend au moins un :
d'une identité de session d'une session de collecte de mesures de QoE,
d'un ou de plusieurs états de RRC de la session de collecte de mesures de QoE, ou
d'un intervalle de rapport de couche d'AS qui déclenche une transmission de mesures de QoE collectées associées à la session de collecte de mesures de QoE dans l'état de veille de RRC ou dans l'état inactif de RRC, et facultativement :
dans lequel l'intervalle de rapport de couche d'AS est désigné comme un pourcentage par rapport à la capacité de taille de tampon de couche d'AS maximale pour stocker les mesures de QoE dans l'état de veille de RRC ou dans l'état inactif de RRC.

5. UE (104 ; 1002) selon la revendication 4, dans lequel l'identité de session de la session de collecte de mesures de QoE comprend un code de pays mobile « MCC », un code de réseau mobile « MNC » et un identifiant de collecte de mesures de QoE, « QMC ».

6. UE (104 ; 1002) selon la revendication 1, dans lequel le au moins un processeur (1004) est configuré pour amener l'UE (104 ; 1002) à recevoir une quatrième signalisation indiquant des informations de libération associées à une libération d'une ou de plusieurs sessions de collecte de mesures de QoE pour les MBS dans l'état de veille de RRC ou l'état inactif de RRC.

7. UE (104 ; 1002) selon la revendication 6, dans lequel le au moins un processeur (1004) est configuré pour amener l'UE (104 ; 1002) à déterminer s'il faut libérer au moins une des sessions de collecte de mesures de QoE pour au moins un des MBS sur la base, au moins en partie, des informations de libération, les informations de libération incluant une liste d'identités de session des une ou plusieurs sessions de collecte de mesures de QoE indiquant la libération des une ou plusieurs sessions de collecte de mesures de QoE pour les MBS dans l'état de veille de RRC ou l'état inactif de RRC.

8. UE (104 ; 1002) selon la revendication 7, dans lequel le au moins un processeur (1004) est configuré pour amener l'UE (104 ; 1002) à :
arrêter la collecte de mesures de QoE pour une session de collecte de mesures de QoE libérée ; et
supprimer des rapports de mesure de QoE stockés associés à la session de collecte de mesures de QoE libérée à partir du tampon de couche AS.

9. Entité de réseau (102 ; 1102) pour une communication sans fil, comprenant :
au moins un processeur (1104) ; et
au moins une mémoire (1106) couplée à le au moins un processeur, le au moins un processeur étant configuré pour amener l'entité réseau à :
transmettre une première signalisation à un équipement utilisateur « UE » sous forme d'une demande de capacités de collecte de mesures de qualité d'expérience, « QoE », prises en charge par l'UE ;
recevoir une deuxième signalisation indiquant une capacité de taille de tampon de couche de strate d'accès, « AS », maximale de l'UE pour stocker les mesures de QoE dans un état de veille de contrôle des ressources radio, « RRC », ou dans un état inactif de RRC ; et
transmettre une troisième signalisation indiquant une configuration de l'UE pour collecter les mesures de QoE pour au moins un service de diffusion/multidiffusion, « MBS ».

10. Entité de réseau (102 ; 1102) selon la revendication 10, dans laquelle le au moins un processeur (1104) est configuré pour amener l'entité de réseau (102 ; 1102) à déterminer s'il faut configurer l'UE pour la collecte des mesures de QoE pour le au moins un MBS.

11. Entité de réseau (102 ; 1102) selon la revendication 10, dans laquelle le au moins un processeur (1104) est configuré pour amener l'entité de réseau (102 ; 1102) à recevoir une quatrième signalisation de mesures de QoE collectées telles que collectées par l'UE pour le au moins un MBS.

12. Entité de réseau (102 ; 1102) selon la revendication 10, dans laquelle la configuration pour collecter les mesures de QoE inclut au moins un :
d'une identité de session d'une session de collecte de mesures de QoE,
d'un ou de plusieurs états de RRC de la session de collecte de mesures de QoE, ou
d'un intervalle de rapport de couche d'AS qui déclenche une transmission par l'UE de mesures de QoE collectées associées à la session de collecte de mesures de QoE dans l'état de veille de RRC ou dans l'état inactif de RRC.

13. **Entité** de réseau (102 ; 1102) selon la revendication 10, dans laquelle le au moins un processeur (1104) est configuré pour amener l'entité de réseau (102 ; 1102) à transmettre une quatrième signalisation indiquant des informations de libération associées à une libération d'une ou de plusieurs sessions de collecte de mesures de QoE pour les MBS dans l'état de veille de RRC ou dans l'état inactif de RRC.

14. Entité de réseau (102 ; 1102) selon la revendication 14, dans laquelle les informations de libération comprennent une liste d'identités de session des une ou plusieurs sessions de collecte de mesures de QoE indiquant la libération des une ou plusieurs sessions de collecte de mesures de QoE pour les MBS dans l'état de veille de RRC ou dans l'état inactif de RRC.

15. Procédé réalisé par un équipement d'utilisateur, « UE », (104 ; 1002) comprenant :
la réception d'une première signalisation sous forme d'une demande de capacités de collecte de mesures de qualité d'expérience, « QoE », prises en charge par l'UE ;
la transmission d'une deuxième signalisation indiquant une capacité de taille de tampon de couche de strate d'accès, « AS », maximale pour stocker les mesures de QoE dans un état de veille de contrôle des ressources radio, « RRC », ou dans un état inactif de RRC ; et
la réception d'une troisième signalisation indiquant une configuration pour collecter les mesures de QoE pour au moins un service de diffusion/multidiffusion, « MBS ».
